(19) Europäisches Patentamt
European Patent Office
Office européen des brevets

(11) **EP 3 831 639 A1**

(12) **EUROPÄISCHE PATENTANMELDUNG**

(43) Veröffentlichungstag:
**09.06.2021 Patentblatt 2021/23**

(21) Anmeldenummer: **20211133.2**

(22) Anmeldetag: **02.12.2020**

(51) Int Cl.:
$B60L\ 3/00^{(2019.01)}$      $B60L\ 3/08^{(2006.01)}$
$B60L\ 7/00^{(2006.01)}$      $B60L\ 13/03^{(2006.01)}$
$B60L\ 15/00^{(2006.01)}$      $B60L\ 15/08^{(2006.01)}$
$B60L\ 15/20^{(2006.01)}$      $H02P\ 3/22^{(2006.01)}$
$H02P\ 3/26^{(2006.01)}$

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(30) Priorität: **03.12.2019 AT 510532019**

(71) Anmelder: **B&R Industrial Automation GmbH**
**5142 Eggelsberg (AT)**

(72) Erfinder:
• **Kaufleitner, Franz**
 **5142 Eggelsberg (AT)**
• **Spanlang, Franz**
 **5142 Eggelsberg (AT)**
• **Flixeder, Stefan**
 **5142 Eggelsberg (AT)**

(74) Vertreter: **Patentanwälte Pinter & Weiss OG**
**Prinz-Eugen-Straße 70**
**1040 Wien (AT)**

(54) **SICHERHEITSFUNKTION FÜR EIN TRANSPORTSYSTEM**

(57) Im in einem elektromagnetischen Transportsystem (2) einen besonders guten Schutz von Individuen zu gewährleisten, ist in einem Transportbereich (20) ein Sicherheitsbereich (S) vorgesehen. Weiters ist eine Sicherheitsfunktion vorgesehen, welche entsprechend einer vorgegebenen Sicherheitsanforderungsstufe sicherstellt, dass die Transporteinheit (1) den Sicherheitsbereich (S) mit einer Geschwindigkeit (v) kleiner gleich einer Sicherheitsgeschwindigkeit (v_S) und/oder mit einer Transporteinheitskraft ($F_1$) kleiner gleich einer Sicherheitskraft (F_S) und/oder einer Transporteinheitsenergie ($E_1$) kleiner gleich einer Sicherheitsenergie (F_S) erreicht oder verhindert, dass die Transporteinheit (1) den Sicherheitsbereich (S) erreicht.

Fig. 1a

EP 3 831 639 A1

**Beschreibung**

Die gegenständliche Erfindung betrifft ein Verfahren zur Steuerung einer Transporteinheit eines elektromagnetischen Transportsystems, vorzugsweise eines Langstatorlinearmotors oder Planarmotors, wobei das elektromagnetische Transportsystem eine Steuereinheit und in einem Transportbereich angeordnete Antriebsspulen umfasst, wobei die Steuereinheit in einem Normalbetrieb die Antriebsspulen derart bestromt, dass ein mit einer Transporteinheit gekoppeltes Magnetfeld im Transportbereich in einer Bewegungsrichtung bewegt wird um die Transporteinheit entlang der Bewegungsrichtung zu bewegen. Weiters betrifft die gegenständliche Erfindung ein elektromagnetisches Transportsystem, umfassend eine Steuereinheit, eine Mehrzahl in einem Transportbereich angeordnete Antriebsspulen und zumindest eine Transporteinheit, wobei die Steuereinheit ausgestaltet ist die Antriebsspulen derart zu bestromen, dass sich ein mit der Transporteinheit gekoppeltes Magnetfeld im Transportbereich in einer Bewegungsrichtung bewegt um die Transporteinheit entlang der Bewegungsrichtung zu bewegen.

Ein elektromagnetisches Transportsystem umfasst einen Transportbereich und eine oder mehrere Transporteinheiten, wobei im Transportbereich Antriebsspulen vorgesehen sind. Gleichermaßen sind an der Transporteinheit Magnete (in der Regel Permanentmagnete) vorgesehen. Durch ein Bestromen der Antriebsspulen mittels einer Steuereinheit wird im Transportbereich ein bewegtes Magnetfeld erzeugt, das mit den Magneten an der Transporteinheit zusammenwirkt. Dadurch wird an der Transporteinheit eine Vortriebskraft erzeugt, wodurch die Transporteinheit in einer Bewegungsrichtung im Transportbereich bewegt wird.

Um den Anforderungen moderner, flexibler Logistikeinheiten gerecht zu werden, werden als elektromagnetisches Transportsysteme vermehrt Langstatorlinearmotoren (LLM) als Ersatz für konventionelle Stetigförderer, beispielsweise rotativ-zu-linear Übersetzeinheiten, wie beispielsweise rotative Motoren an einem Förderband, eingesetzt. Langstatorlinearmotoren zeichnen sich durch eine bessere und flexiblere Ausnützung über den gesamten Arbeitsbereich aus. So können die Bereiche der Geschwindigkeit und Beschleunigung von Null bis zum Maximum ausgenutzt werden. Zudem sind eine individuelle Regelung bzw. Steuerung der beweglichen Transporteinheiten (Shuttles), eine verbesserte Energieausnützung, die Reduktion der Wartungskosten aufgrund der geringeren Anzahl an Verschleißteilen, einen einfachen Austausch der Transporteinheiten, ein effizientes Monitoring, eine einfachere Fehlerdetektion und eine Optimierung des aufgenommen Stromes durch Eliminierung von Stromlücken als Vorteile aufzuzählen.

Ein Stator eines Langstatorlinearmotors bildet eine Transportstrecke und besteht aus einer Vielzahl von in Bewegungsrichtung nebeneinander angeordneten Antriebsspulen. Diese

Antriebsspulen werden einzeln oder in Gruppen angesteuert, wobei oftmals jeweils eine Mehrzahl an Antriebsspulen in Transportsegmente gruppiert werden. Die Transportstrecke des Langstatorlinearmotors stellt somit den Transportbereich dar und ist grundlegend eindimensional ausgeführt. Das bedeutet, dass die Bewegung der Transporteinheit grundlegend eindimensional entlang einer vorgegebenen Transportstrecke erfolgt. Die Transportstrecke kann jedoch beliebig im Raum geführt werden und auch Abzweigungen und/oder Weichen aufweisen

Ebenso kann beispielsweise ein Planarmotor als elektromagnetische Transporteinrichtung vorgesehen sein. Ein Planarmotor kann beispielsweise in einem Produktionsprozess genutzt werden, wobei sehr flexible Transportprozesse mit komplexen Bewegungsprofilen realisiert werden können. Ein Planarmotor weist im Gegensatz zum Langstatorlinearmotor eine Transportebene als Transportbereich auf. Die Transportebene ist grundlegend zweidimensional, beispielsweise in der xy-Ebene, ausgeführt. Die Antriebsspulen sind in der Transportebene verteilt angeordnet, um ein Magnetfeld zu erzeugen, welches in der Transportebene in zwei Dimensionen bewegt werden kann. Die Magnete sind vorteilhafterweise an der Transporteinheit ebenso zweidimensional verteilt angeordnet um mit dem Magnetfeld zusammenwirken und die Transporteinheit in der Transportebene zu bewegen. Die Antriebsspulen und die Magnete sind vorteilhafterweise derart angeordnet, dass neben einer eindimensionalen Bewegung entlang der von der Transportebene aufgespannten Achsen (x-Achse und y-Achse in einer xy-Ebene) auch komplexere zweidimensionale Bewegungen der Transporteinheit in der Transportebene möglich sind. Grundlegend ist es auch möglich, dass nur eine eindimensionale Bewegung in der Transportebene vorgesehen ist. In diesem Fall können die Magnete und Antriebsspulen auch lediglich eindimensional angeordnet sein. Die Funktionsweise und der Aufbau von Planarmotoren ist grundsätzlich bekannt und kann beispielsweise der US 9,202,719 B2 entnommen werden.

Wird durch einen Anwender oder einen Unbefugten ein Sicherheitsbereich eines elektromagnetischen Transportsystems betreten, so ist es erforderlich dieses Individuum vor Verletzungen zu schützen um sicherzustellen, dass insbesondere durch die bewegten Transporteinheiten keine Gefährdung für das Individuum entsteht.

Elektromagnetische Transportsysteme sind daher oftmals eingehaust um einen Zugriff durch Individuen zu verhindern. Es ist jedoch auch bei eingehausten elektromagnetischen Transportsystemen erforderlich, dass ein Anwender Zugriff auf das elektromagnetische Transportsystem hat, insbesondere bei Durchführung von Einrichtarbeiten und/oder Wartungsarbeiten. Aus diesem Grunde sind oftmals Schutztüren in der Einhausung vorgesehen. Ein Zutritt zum elektromagnetischen Transportsystem durch eine Schutztüre ist jedoch zeitaufwändig und erhöht die Einrichtdauer bzw. Wartungsdauer.

Als besonders großer Nachteil ist jedoch anzusehen, dass diese Schutztüren den eigentlichen Schutz durch die Einhausung außer Kraft setzen, womit durch das Öffnen einer entsprechenden Schutztüre abermals eine hohe Gefahr einer Verletzung eines Individuums entsteht. Weiters erhöht eine Einhausung die Kosten für die Konstruktion des elektromagnetischen Transportsystem.

Zusätzlich oder alternativ zu einer Einhausung kann auch die Energieversorgung der Transporteinheiten von elektromagnetischen Transportsystemen abgeschaltet werden, wenn ein Anwender oder Unbefugter einen Sicherheitsbereich des elektromagnetischen Transportsystems betritt. Da die Transporteinheiten jedoch sehr hohe Momente bei sehr geringer Reibung aufweisen, sind die systeminternen Bremseigenschaften bei einer Energiefreischaltung, beispielsweise einer Safe-Torque-Off-Funktion (STO-Funktion) sehr gering, was große Bremswege zur Folge hat. Hier können aktive Bremskonzepte, welche ein rascheres Abbremsen von Transporteinheiten ermöglichen, Abhilfe schaffen. Die US 2012/193172 A1 offenbart beispielsweise spezielle an einem Linearmotor angebrachte Bremswindungen zum Erzeugen einer Bremswirkung.

Es ist eine Aufgabe der gegenständlichen Erfindung Sicherheitsfunktionen für ein elektromagnetisches Transportsystem anzugeben, welche einen besonders guten Schutz von Individuen ermöglichen.

Diese Aufgabe wird erfindungsgemäß durch ein Verfahren gelöst, indem im Transportbereich ein Sicherheitsbereich vorgesehen ist, wobei eine Sicherheitsfunktion vorgesehen ist, welche entsprechend einer vorgegebenen Sicherheitsanforderungsstufe sicherstellt, dass die Transporteinheit den Sicherheitsbereich mit einer Geschwindigkeit kleiner gleich einer Sicherheitsgeschwindigkeit und/oder mit einer Transporteinheitskraft kleiner gleich einer Sicherheitskraft und/oder mit einer Transporteinheitsenergie kleiner gleich einer Sicherheitsenergie erreicht, oder verhindert, dass die Transporteinheit den Sicherheitsbereichs erreicht.

Weiters wird die Aufgabe durch ein elektromagnetisches Transportsystem gelöst, wobei im Transportbereich ein Sicherheitsbereich vorgesehen ist, wobei ein Sicherheitsmodul vorgesehen ist, welches ausgestaltet ist entsprechend einer vorgegebenen Sicherheitsanforderungsstufe sicherzustellen, dass die Transporteinheit den Sicherheitsbereich mit einer Geschwindigkeit kleiner gleich einer Sicherheitsgeschwindigkeit und/oder mit einer Transporteinheitskraft kleiner gleich einer Sicherheitskraft und/oder mit einer Transporteinheitsenergie kleiner gleich einer Sicherheitsenergie erreicht, oder zu verhindern, dass die Transporteinheit den Sicherheitsbereich erreicht. Das Sicherheitsmodul dient der Realisierung der Sicherheitsfunktion.

Die Sicherheitsfunktion kann permanent aktiv sein, aber auch aktiviert werden, indem ein Sicherheitszustand ausgelöst wird.

Der Sicherheitszustand kann beispielsweise ausgelöst werden, wenn sich Individuen in einem Gefahrenbereich des elektromagnetischen Transportsystems, insbesondere im Sicherheitsbereich selbst, befinden. Zur Erkennung der Individuen können beispielsweise Lichtschranken, Laserscanner, Kamerasysteme, Sicherheitskontake an Schutztüren, etc. vorgesehen sein. Der Sicherheitszustand kann jedoch auch bei Überbelastungen des Systems, Spannungsüberhöhungen aber auch z.B. Verlust der Positions- bzw. Geschwindigkeitsinformation ausgelöst werden. Der Sicherheitszustand kann beispielsweise wiederum durch Auslösen eines Notsignals ausgelöst werden.

Durch die Bereitstellung der erfindungsgemäßen Sicherheitsfunktion entsprechend der vorgegebenen Sicherheitsanforderungsstufe können aufwändige Einhausungen des elektromagnetischen Transportsystems entfallen, womit das Risiko eines Zugriffs durch eine Schutztüre eliminiert wird. Dadurch wird die Zusammenarbeit zwischen einem Anwender und dem elektromagnetischen Transportsystem erleichtert, womit die Effektivität und Flexibilität des Betriebs des elektromagnetischen Transportsystems gesteigert wird.

Die Sicherheitsanforderungen können nach internationalen Normenreihen und/oder Normen, beispielsweise der Normenreihe IEC 61508 ausgeführt werden, wobei die IEC 61508 als Normenreihe kein Ausgabedatum, sondern Editionen aufweist. Es können wahlweise die Sicherheitsanforderungen der IEC 61508 Ed 1 oder Ed 2 herangezogen werden. Die Normenreihe IEC 61508 unterscheidet abhängig vom Risiko einer Gefährdung zwischen unterschiedlichen Sicherheitsanforderungsstufen (SIL - Safety Integrity Level). SIL 0 beschreibt dabei ein sehr geringes Risiko und SIL 4 ein sehr hohes Risiko, wobei das verbleibende Restrisiko von der gewählten Sicherheitsanforderungsstufe abhängig ist. Abhängig von der gewählten Sicherheitsanforderungsstufe können konstruktive und qualitätssichernde Maßnahmen zur Sicherstellung der Funktionsweise der Sicherheitsfunktion definiert werden. Es ist dabei insbesondere sicherzustellen, dass bei einem Ausfall eines sicherheitsrelevanten Elements des elektromagnetischen Transportsystems, dieses nicht in einen undefinierten und damit möglicherweise gefahrbringenden Zustand gerät.

Vorzugsweise ist die Sicherheitsfunktion zumindest teilweise, vorzugsweise vollständig, redundant ausgeführt. Somit kann einem Ausfall von Komponenten der Sicherheitsfunktion vorgebeugt werden. Da ein elektromagnetisches Transportsystem, z.B. ein Langstatorlinearmotor oder ein Planarmotor, üblicherweise eine Mehrzahl an Transportsegmenten umfasst, kann eine Redundanz durch eine Kombination von gegenüberliegenden oder aufeinanderfolgenden Transportsegmenten realisiert werden. Hierzu kann die Sicherheitsfunktion auf jedem der beteiligten Transportsegmenten separat redundant realisiert werden, was insbesondere vorteilhaft ist, wenn die einzelnen Transportsegmente jeweils ein abgeschlossenes Antriebselement darstellen. In diesem Fall kann eine gegenseitige Abhängigkeit der redundanten Ausführungen verringert oder komplett vermieden werden.

Vorzugsweise umfasst die Sicherheitsfunktion eine Diagnosefunktion, welche die Funktionsfähigkeit der Sicherheitsfunktion prüft.

Damit kann die Funktion der Sicherheitsfunktion, vorzugsweise in allen Betriebszuständen, geprüft und sichergestellt werden.

Vorzugsweise erfüllt die Sicherheitsfunktion zumindest die Sicherheitsanforderungsstufe 1 (SIL 1) nach der Normenreihe IEC 61508.

Damit kann eine Einfehlersicherheit gewährleistet sein, was bedeutet, dass nach dem Auftreten eines Fehlers in der Sicherheitsfunktion die Funktion der Sicherheitsfunkton selbst weiterhin gewährleistet bleibt.

Vorzugsweise erfüllt die Sicherheitsfunktion weitere Sicherheitsanforderungen nach zumindest einer der Normenreihen IEC 61508 und/oder der Normen, ISO 13849-1:2015-12, IEC 62061:2005.

Entsprechend kann das Sicherheitsmodul zumindest die Sicherheitsanforderungsstufe (SIL) 1 nach der Normenreihe IEC 61508, besonders vorzugsweise weitere Sicherheitsanforderungen zumindest einer der Normenreihe IEC 61508 und/oder der Normen ISO 138491:2015-12, IEC 62061:2005 erfüllen.

Es können im Rahmen der Sicherheitsfunktion im Transportbereich natürlich mehrere Sicherheitsbereiche, die derselben oder verschiedenen Sicherheitsanforderungsstufe/n genügen, vorgesehen sein. Gleichermaßen können für unterschiedliche Transporteinheiten dieselben oder unterschiedliche Sicherheitsbereiche und/oder Sicherheitsanforderungsstufen gelten.

Vorzugsweise ist der Sicherheitsbereich ortsfest im Transportbereich vorgesehen, wobei der Sicherheitsbereich besonders vorzugsweise zumindest einen Teil eines in Bewegungsrichtung vor der Transporteinheit angeordneten Transportsegments des Transportbereichs umfasst.

Damit kann im Transportbereich ein fest vorgesehener Sicherheitsbereich realisiert sein, welcher beispielsweise einen besonders sicherheitsrelevanten Abschnitt, z.B. ein kritisches Transportsegment, beschreibt.

Die Position des Sicherheitsbereichs im Transportbereich kann auch dynamisch bestimmt werden. Der Sicherheitsbereich kann am Beginn oder Ende eines Transportsegments, aber auch in einem fest vorgegebenen oder flexibel bestimmten Abstand vor oder nach einem Transportsegment und/oder einer Transporteinheit oder einer fest vorgegebenen Position auf dem Transportbereich beginnen und/oder enden. Eine flexible Position eines Sicherheitsbereichs und/oder ein flexibler Abstand eines Sicherheitsbereichs vor oder nach einem Transportsegment und/oder einer Transporteinheit kann beispielsweise aufgrund vorherrschender Parameter der Transporteinheit (Geschwindigkeit, der Last, der Bewegungsrichtung, Eigenschaften (z.B. Temperatur) des Transportgutes, ...), einer Position eines Individiums, etc. bestimmt werden.

Es kann Bewegungsrichtung vor der Transporteinheit ein sicherer Verzögerungsbereich vorgesehen sein, wobei der Sicherheitsbereich nach dem sicheren Verzögerungsbereich beginnt. Bei einem Planarmotor als elektromagnetisches Transportsystem kann beispielsweise ein Verzögerungsbereich um den Sicherheitsbereich angeordnet sein.

Der sichere Verzögerungsbereich kann fest vorgegeben oder (z.B. aufgrund vorherrschender Parameter) flexibel bestimmt werden. Als sicherer Verzögerungsbereich kann beispielsweise ein sichergestellter Bremsweg der Transporteinheit deinen. Der Sicherheitsbereich kann (über den Verzögerungsbereich) nur von der Position der Transporteinheit (und allfällig vorherrschenden Parametern) abhängig sein. Es sind jedoch auch Mischformen vorstellbar, wobei der Sicherheitsbereich grundlegend von der Position der Transporteinheit abhängig ist, jedoch in Bezug auf (strukturelle) Eigenschaften des Transportbereichs festgelegt wird. So kann beispielsweise ein in Bewegungsrichtung vor der Transporteinheit liegendes Transportsegment, beispielsweise das nächste in Bewegungsrichtung vor der Transporteinheit liegende Transportsegment als Sicherheitsbereich definiert werden. Damit ist der Sicherheitsbereich von der Position der Transporteinheit, als auch von der Anordnung des Transportsegments im Transportbereich abhängig. Auch hier ist es möglich, dass ein Sicherheitsbereich einen fest vorgegebenen oder flexibel bestimmten Teil des Transportbereichs vor oder nach einem Transportsegment, welches in Bewegungsrichtung vor der Transporteinheit liegt, umfasst. Ebenso kann ein Sicherheitsbereich erst nach einem fest vorgegebenen oder flexibel bestimmten Abstand vor oder nach einem Transportsegment, welches in Bewegungsrichtung vor der Transporteinheit liegt, beginnen.

Vorzugsweise umfasst das Sicherheitsmodul ein an der Transporteinheit und/oder im Transportbereich angeordnetes Bremselement, welches ausgestaltet ist, im Rahmen der Sicherheitsfunktion entsprechend einer vorgegebenen Sicherheitsanforderungsstufe sicherzustellen, dass die Bewegung der Transporteinheit derart gebremst wird, dass sie den Sicherheitsbereich mit einer Geschwindigkeit kleiner gleich einer Sicherheitsgeschwindigkeit und/oder mit einer Transporteinheitskraft kleiner gleich einer Sicherheitskraft und oder mit einer Transporteinheitsenergie kleiner gleich einer Sicherheitsenergie erreicht, oder zu verhindern, dass die Transporteinheit den Sicherheitsbereich erreicht.

Das Bremselement hat die Aufgabe, im Rahmen der Sicherheitsfunktion die Geschwindigkeit der Transporteinheit derart zu reduzieren, dass sie bei einem Erreichen des Sicherheitsbereichs kleiner gleich einer Sicherheitsgeschwindigkeit ist, und/oder die Transporteinheitskraft der Transporteinheit derart zu reduzieren, dass sie kleiner gleich einer Sicherheitskraft ist und oder die Sicherheitsenergie derart zu reduzieren, dass sie kleiner gleich einer Transporteinheitsenergie ist oder den Sicherheitsbereich gar nicht erreicht.

Die Sicherheitsgeschwindigkeit und/oder Sicherheitskraft und/oder Sicherheitsenergie kann fest vorgegeben oder flexibel, z.B. anhand vorherrschender Parameter, festgelegt werden. Das Bremselement kann ein elektrisches, elektromechanisches, pneumatisches, oder hydraulisches Bremssystem umfassen und muss grundlegend der vorgegebenen Sicherheitsanforderungsstufe genügen. Es kann je nach gewählter Sicherheitsanforderungsstufe auch erforderlich sein, dass bei einer Dimensionierung von elektrischen und/oder elektromechanischen und/oder pneumatischen und/oder hydraulischen Komponenten das Genügen der jeweiligen Sicherheitsanforderungsstufe gewährleistet ist.

Als Bremselement kann beispielsweise ein Transportsegment mit besonders hohen Kräften vorgesehen sein, das in der Lage ist, die Transporteinheit durch Wirken dieser Kräfte entsprechend vor dem Sicherheitsbereich zu verzögern bzw. zum Stillstand zu bringen.

Weiters kann als Bremselement ein magnetisches und/oder magnetisierbares Bremsobjekt vorgesehen sein, welches an der Transporteinheit und/oder im Transportbereich vorgesehen sein kann. Im Rahmen der Sicherheitsfunktion kann das Bremsobjekt mit einem Gegenbremsobjekt magnetisch gekoppelt werden, womit die Geschwindigkeit der Transporteinheit verringert wird. Diese Verzögerung kann durch Reluktanzkräfte, welcher der Bewegung der Transporteinheit, entgegenwirken, erfolgen. Bei einer mechanischen in Bewegungsrichtung geführten Transporteinheit kann die Bremswirkung auch durch die Anteile der Reluktanzkraft, welche normal auf das mechanische Führungssystem stehen, erhöht werden, da der Reibungswiderstand typischerweise eine Funktion der Normalkraft ist. Weiters kann eine Verzögerung durch mittels zeitlicher Änderung des Magnetfelds induzierte Wirbelströme, welche der Bewegung des Magnetfelds, und damit der Transporteinheit, entgegenwirken, erfolgen. Selbstverständlich, können die genannten magnetischen Wirkmechanismen zur Verzögerung auch kombiniert werden.

Da genannte magnetische Wirkmechanismen exponentiell mit dem Abstand abnehmen, kann bei Annäherung der Transporteinheit auf ein magnetisches und/oder magnetisierbares Bremsobjekt eine erhöhte Bremswirkung erzielt werden. Weiters nehmen genannte magnetische Wirkmechanismen linear mit der Wirkfläche zu. Durch Erhöhung der Wirkfläche, zum Beispiel durch seitliches Einschieben des Bremsobjekt zwischen Transporteinheit und Transportsegment, kann eine erhöhte Bremswirkung erzielt werden.

Im Rahmen der Sicherheitsfunktion kann somit der Abstand zwischen Bremsobjekt und Gegenbremsobjekt verringert und/oder die Wirkfläche des Bremsobjekts und/oder Gegenbremsobjekts erhöht und so die Transporteinheit verzögert werden.

Ist der Abstand zwischen Bremsobjekt und Gegenbremsobjekt größer Null, so erfolgt die Verzögerung berührungslos.

Weiters kann als Bremselement eine Düse zum Einblasen eines Gas- oder Flüssigkeitsstrahls, beispielsweise Luft- oder Wasserstrahls. vorgesehen sein, wobei der Gas- oder Flüssigkeitsstrahl die Transporteinheit abbremst.

Ebenso kann als Bremselement ein, vorzugsweise mechanisch elastisches, Bremsobjekt vorgesehen sein, welches an der Transporteinheit und/oder im Transportbereich vorgesehen sein kann. Im Rahmen der Sicherheitsfunktion kann das Bremsobjekt mit einem Gegendruckobjekt in Kontakt gebracht werden, womit die Transporteinheit verzögert wird. Das Bremsobjekt und Gegendruckobjekt können somit entsprechend einer Backenbremse wirken.

Es kann auch ein magnetisches und/oder magnetisierbares Bremsobjekt mit einem mechanischen und/oder elastischen Bremsobjekt kombiniert werden. Ein derart kombiniertes Bremselement bremst für einen Abstand größer Null zwischen Bremsobjekt und Gegenbremsobjekt berührungslos und bremst mit erhöhter Kraftwirkung, wenn das Bremsobjekt mit dem Gegendruckobjekt in Kontakt gebracht wird.

Vorzugsweise umfasst das Sicherheitsmodul ein an der Transporteinheit und/oder im Transportbereich angeordnetes Blockierelement, welches ausgestaltet ist mit einer vorgegebenen Sicherheitsanforderungsstufe sicherzustellen, dass die Bewegung der Transporteinheit derart blockiert wird, dass ein Erreichen des Sicherheitsbereich verhindert wird.

Durch das Blockierelement wird grundlegend verhindert, dass die Transporteinheit den Sicherheitsbereich erreicht und in diesen eindringt. Das Blockierelement kann elektrische und/oder elektromechanische und/oder hydraulische und/oder pneumatische Komponenten umfassen sein, wobei bei der Dimensionierung der jeweiligen Komponenten die geforderten Sicherheitsfunktionen berücksichtigt werden.

Als Blockierelement kann ein vorzugsweise mechanisch elastisches, Blockierobjekt, wie beispielsweise ein Bolzen vorgesehen sein. im Rahmen der Sicherheitsfunktion kann das Blockierobjekt mit einem Gegenblockierobjekt in Eingriff gebracht werden, womit die Bewegung der Transporteinheit vor Erreichen des Sicherheitsbereichs blockiert wird.

Es kann auch ein Blockierelement mit einem Bremselement kombiniert werden, beispielsweise indem ein Bremsobjekt auch als Blockierobjekt dient. Das kombinierte Bremsobjekt und Blockierobjekt bremst somit, wenn es mit einem Gegendruckobjekt in Kontakt gebracht wird und blockiert, wenn es mit einem Gegenblockierelement in Eingriff gebracht wird. Ein derartig kombiniertes Element kann je nach Sicherheitsanforderungsstufe, Geschwindigkeit der Transporteinheit, oder anderen vorgegebenen Parametern wahlweise als Blockierelement oder Bremselement dienen, wobei das Gegendruckobjekt und Gegenblockierobjekt auch identisch sein können.

Vorzugsweise umfasst das Sicherheitsmodul ein an der Transporteinheit und/oder im Transportbereich angeordnetes Umlenkelement, welches ausgestaltet ist mit einer vorgegebenen Sicherheitsanforderungsstufe sicherzustellen, dass die Bewegung der Transporteinheit vor Erreichen des Sicherheitsbereich aus dem Sicherheitsbereich umgelenkt wird.

Damit kann sichergestellt werden, dass die Transporteinheit nicht in den Sicherheitsbereich gelangt, da sie daran durch die Umlenkung daran gehindert wird in den Sicherheitsbereich vorzudringen.

Eine Umlenkung kann durch ein mechanisches Umlenkelement, zum Beispiel eine mechanische Weiche, erfolgen. Das Umlenkelement kann elektrische und/oder elektromechanische und/oder hydraulische und/oder pneumatische Komponenten umfassen, wobei bei der Dimensionierung der jeweiligen Komponenten die geforderten Sicherheitsfunktionen berücksichtigt werden.

Weiters kann eine Umlenkung berührungslos erfolgen. Es kann eine Düse zum Einblasen eines Gas- oder Flüssigkeitsstrahls, beispielsweise Luft- oder Wasserstrahls, als Umlenkelement vorgesehen sein, wobei der Gas- oder Flüssigkeitsstrahls die Transporteinheit derart umlenkt, dass die Transporteinheit den Sicherheitsbereich nicht erreicht. Es kann ein magnetisches und/oder elektromagnetisches Umlenkelement vorgesehen sein, wobei das Umlenkelement die Transporteinheit durch magnetische und/oder elektromagnetisches Kraftwirkung derart umlenkt, dass die Transporteinheit den Sicherheitsbereich nicht erreicht.

Es ist natürlich auch ein Sicherheitsmodul umfassend eine Kombination aus Bremselementen und/oder Blockierelementen und/oder Umlenkelementen vorstellbar. Grundlegend muss das Sicherheitsmodul, bzw. die Sicherheitsfunktion der vorgegebenen Sicherheitsanforderungsstufe genügen. Je nach Ausgestaltung müssen somit auch umfasste Bremselemente und/oder Blockierelemente und/oder Umlenkelemente der vorgegebenen Sicherheitsanforderungsstufe genügen.

Es kann im Rahmen der Sicherheitsfunktion zumindest ein Teil der Antriebsspulen zumindest über einen Zeitabschnitt in einem Leerlauf betrieben werden.

Damit werden die relevanten Antriebsspulen stromlos geschaltet um die Transporteinheit nicht mehr aktiv weiterzubewegen. Ein Leerlauf kann insbesondere in Kombination mit Bremselementen und/oder Blockierelementen und/oder Umlenkelementen vorteilhaft sein.

Vorzugsweise wird im Rahmen der Sicherheitsfunktion zumindest ein Teil der Antriebspulen zumindest über einen Zeitabschnitt in einem Kurzschluss betrieben.

Dadurch wird die Transporteinheit abgebremst und analog zur Verwendung von Bremselementen entsprechend einer vorgegebenen Sicherheitsanforderungsstufe sichergestellt, dass die Transporteinheit den Sicherheitsbereich mit einer Geschwindigkeit kleiner gleich einer Sicherheitsgeschwindigkeit und/oder mit einer Transporteinheitskraft kleiner einer Sicherheitskraft und oder mit einer Transporteinheitsenergie kleiner einer Sicherheitsenergie erreicht oder zu verhindern, dass die Transporteinheit den Sicherheitsbereich erreicht.

Die Transporteinheit bewegt sich ohne geeignete Aktionen im Transportbereich des elektromagnetischen Transportsystems bis zum Stillstand mit einer geringen Verzögerung (aufgrund einer erwünschten reibungslosen oder reibungsarmen Lagerung bzw. Führung der Transporteinheiten im Transportbereich) weiter, wobei von der Transporteinheit durch die Erregungsmagnete selbst ein bewegtes Magnetfeld erzeugt wird. Dieses Magnetfeld bewegt sich mit der Transporteinheit im Transportbereich und weist damit auch die Geschwindigkeit der Transporteinheit auf. Dabei wirkt dieses Magnetfeld auch mit den Antriebspulen zusammen, was bei offenen Klemmen der Antriebsspulen keinen Effekt hätte. Die Antriebspulen, die mit der Transporteinheit magnetisch gekoppelt sind, induzieren jedoch bei kurzgeschlossenen Klemmen über eine Elektro-Magnetische-Kraft (EMK) jeweils einen Spulenkurzschlussstrom. Dieser Spulenkurzschlussstrom wirkt nach der Lenz'schen Regel dem durch die Transporteinheit hervorgerufenen Magnetfeld entgegen, womit die Transporteinheit relativ rasch abgebremst wird. Somit wird der Kurzschluss des zumindest Teils der Antriebspulen vorzugsweise dauerhaft aufrechterhalten.

Besonders vorteilhaft ist es, wenn im Rahmen der Sicherheitsfunktion zumindest ein Teil der Antriebsspulen zumindest über einen ersten Zeitabschnitt in einem Kurzschluss betrieben wird und der zumindest eine Teil der Antriebspulen zumindest über einen zweiten Zeitabschnitt in einem Leerlauf betrieben wird.

Dadurch wird die Transporteinheit besonders effektiv abgebremst und analog zur Verwendung von Bremselementen entsprechend einer vorgegebenen Sicherheitsanforderungsstufe sichergestellt, dass die Transporteinheit den Sicherheitsbereich mit einer Geschwindigkeit kleiner gleich einer Sicherheitsgeschwindigkeit und/oder mit einer Transporteinheitskraft kleiner einer Sicherheitskraft und/oder mit einer Transporteinheitsenergie kleiner einer Sicherheitsenergie erreicht, oder zu verhindern, dass die Transporteinheit den Sicherheitsbereich erreicht.

Bei einem Kurzschluss sind die betreffenden Spulenklemmen geschlossen, bei einem Leerlauf sind die betreffenden Spulenklemmen geöffnet. Bei geeigneter Wahl des ersten und zweiten Zeitabschnitts kann der Kurzschlussstrom (als Summe der jeweils fließenden Spulenkurzschlussströme) derart geregelt werden, dass eine größere Stromkomponente in Vortriebskraftrichtung (d.h. in einem kartesischen feldorientierten dq-Koordinatensystem in q-Richtung) erreicht wird. Damit wird der Anteil des Kurzschlussstroms, welcher der der Vortriebsbewegung dienenden Feldrichtung entgegenwirkt, erhöht, womit eine größere Bremswirkung als bei einem dauerhaften Kurzschluss erzielt wird und womit die Transporteinheit noch schneller zum Stillstand kommt. Somit kann selbst bei geringeren Kurschlussströmen eine höhere Bremskraft und damit eine bessere und raschere Abbremsung der Transporteinheit erzielt werden. Zudem werden eine geringere Strombelastung und eine geringere Feldschwächung erreicht. Eine geringere Feldschwächung bedingt zudem eine geringere Normalkraftabnahme, womit unter Umständen zusätzlich verhindert werden kann, dass die Transporteinheit bei einer bestimmten Geschwindigkeit, insbesondere wenn die Bewegungsrichtung eine Kurve beschreibt, vom Transportbereich abheben kann.

Vorteilhafterweise wird ein gesamter durch die Antriebspulen fließender Kurzschlussstrom ermittelt und ein Soll-Kurzschlussstrom mit einer maximalen vortriebskraftbildende Kurzschlussstromkomponente icq mittels einer vorgegebenen Beziehung ermittelt. Im geregelten Kurzschlussmodus kann in einer Kurzschlussphase, in welcher der Kurzschlussstrom kleiner als der Soll-Kurzschlussstrom ist, der zumindest eine Teil der Antriebspulen im Kurzschluss betrieben werden. In einer Leerlaufphase, in welcher der Kurzschlussstrom dem Soll-Kurzschlussstrom erreicht oder überschreitet, kann der zumindest eine Teil der Antriebspulen im Leerlauf betrieben werden.

Es kann aber im geregelten Kurzschlussmodus in einer Kurzschlussphase, in welcher der Kurzschlussstrom kleiner als der Soll-Kurzschlussstrom multipliziert mit einem Faktor ist, der zumindest eine Teil der Antriebspulen im Kurzschluss betrieben werden. In einer Mischphase, in welcher der Kurzschlussstrom dem Soll-Kurzschlussstrom multipliziert mit einem Faktor entspricht oder überschreitet, wird der zumindest eine Teil der Antriebspulen abwechselnd im Kurzschluss und im Leerlauf betrieben. In einer Leerlaufphase, in welcher der Kurzschlussstrom dem Soll-Kurzschlussstrom multipliziert mit dem Term 2 minus Faktor a entspricht oder überschreitet, wird der zumindest eine Teil der Antriebspulen im Leerlauf betrieben.

Vorzugsweise entspricht die vorgegebene Beziehung f:

$$ic\_soll = \frac{1}{\sqrt{2}} \frac{\Psi}{L},$$

wobei $\Psi$ dem Hauptfluss und L der ungesättigten Induktivität entspricht und die Beziehung aus der Ständerspannungsgleichung bei einer mehrphasigen Anspeisung abgeleitet werden kann. Es kann in der Mischphase der zumindest eine Teil der Antriebspulen jeweils abwechselnd über ein Kurzschlussintervall im Kurzschluss betrieben werden und über ein Leerlaufintervall im Leerlauf betrieben wird, wobei die Dauer des Kurzschlussintervalls zur Dauer des Leerlaufintervalls bestimmt und vorteilhafterweise über ein Polynom dritter Ordnung mit einer Fehlerabweichung berechnet wird.

Weiters kann ein Faktor von 0.85 gewählt werden, welcher eine besonders gute Bremswirkung bewirkt, wie sich auch in der Praxis bestätigt hat.

Ganz besonders vorteilhaft ist es, wenn nur die mit der Transporteinheit magnetisch gekoppelten Antriebspulen in den geregelten Kurzschlussmodus geschaltet werden. Damit müssen nicht alle Antriebsspulen des gesamten elektromagnetischen Transportsystems in den Kurzschlussmodus geschaltet werden. So kann beispielsweise nach Bedarf auch nur eine Transporteinheit abgebremst werden, wogegen die weiteren Transporteinheiten vom Bremsvorgang nicht betroffen sind.

Hierzu können die mit der Transporteinheit magnetisch gekoppelten Antriebspulen mittels eines Positionssensors bestimmt werden. Dies kann vorteilhaft sein, wenn ohnehin bereits Positionssensoren am elektromagnetischen Transportsystem vorgesehen sind.

Die mit der Transporteinheit magnetisch gekoppelten Antriebspulen können aber auch über einen in der jeweiligen Antriebsspule induzierten Spulenkurzschlussstrom erkannt werden. Dieser induzierte Spulenkurzschlussstrom lässt auf eine magnetische Kopplung mit einer Transporteinheit schließen.

Natürlich können je nach Wunsch auch weitere Antriebsspulen in den geregelten Kurzschlussmodus geschaltet werden, beispielsweise eine bestimmte Anzahl an Antriebsspulen, die sich in Bewegungsrichtung vor der Transporteinheit befinden, etc.

Die Dauer des Bremsvorgangs ist, neben der Wahl des ersten bzw. zweiten Zeitabschnitts, von der Masse der Transporteinheit, wie auch von an die Transporteinheit gebundene zusätzliche Massen (Transportgut, Werkstück,...) und/oder der Geschwindigkeit der Transporteinheit abhängig. Die Energie, die während des Bremsvorgangs frei wird, wird vorwiegend in den Wicklungswiderständen (Kupferverluste) und im Eisen (vorwiegend Wirbelstromverluste) in Wärme umgesetzt.

Ein Kurzschluss kann für unterschiedliche Ausgestaltung einer Steuerungseinheit unterschiedliche Schalterstellungen bedeuten. Weist die Steuerungseinheit Vollbrücken, wie in der US 2006/0220623 A1, mit jeweils vier Schaltern pro Antriebspule auf, so kann während des geregelten Kurzschlusses in der Kurzschlussphase, bzw. dem Kurzschlussintervall ein satter Kurzschluss geschaltet werden. Weist die Steuerungseinheit jedoch Halbbrücken, umfassend einen oberen und einen unteren Schalter pro Antriebsspule, auf (siehe AT 518 721 A1), so wird in der Kurzschlussphase, bzw. dem Kurzschlussintervall der Kurzschluss moduliert. Das bedeutet, dass der obere Schalter der Halbbrücke abwechselnd mit dem unteren Schalter der Halbbrücke durchgeschaltet wird, vorzugsweise in einem Verhältnis von 50/50. Dabei dürfen jedoch der obere Schalter und der untere Schalter nicht gleichzeitig durchgeschaltet sein.

In den Ausgestaltungen, welche den Betrieb der Antriebspulen betreffen, kann das Sicherheitsmodul auf die Steuereinheit des elektromagnetischen Transportsystems zugreifen oder auch Teil der Steuereinheit sein. Auch hier sind die Anforderungen der vorgegebenen Sicherheitsanforderungsstufe einzuhalten, beispielsweise in Form einer redundanten Ausgestaltung der Steuereinheit. Es kann auch vorgesehen sein Antriebsspulen verschachtelt durch verschiedene Steuereinheiten anzusteuern. Damit kann bei Ausfall einer Steuereinheit die weitere, nicht ausgefallene Steuereinheit, weiterhin Kurzschlüsse und/oder Leerläufe von Antriebsspulen vorsehen.

Im Transportbereich kann auch eine Mehrzahl an Sicherheitsbereichen mit zugehörigen Sicherheitsfunktionen vorgesehen sein. Die Sicherheitsfunktionen können jeweils permanent aktiv sein oder durch einen Sicherheitszustand aktivierbar sein, wobei ein Transportbereich permanent aktive und aktivierbare Sicherheitsfunktionen umfassen kann. Die Sicherheitsfunktionen eines Transportbereichs können natürlich auch unterschiedlich ausgeführt sein, beispielsweise jeweils durch Bremselemente und/oder Blockierelemente und/oder Umlenkelemente, etc.

Es können in einem Sicherheitsbereich eines Transportbereichs auch mehrere Sicherheitsfunktionen vorgesehen sein, die jeweils permanent aktiv und/oder aktivierbar sind. Dies kann auch als überdeckende einzelne Sicherheitsbereiche interpretiert werden. Auch Die Sicherheitsfunktionen eines Sicherheitsbereichs können unterschiedlich ausgeführt sein, beispielsweise jeweils durch Bremselemente und/oder Blockierelemente und/oder Umlenkelemente, etc.

Die gegenständliche Erfindung wird nachfolgend unter Bezugnahme auf die Figuren 1 bis 9 näher erläutert, die beispielhaft, schematisch und nicht einschränkend vorteilhafte Ausgestaltungen der Erfindung zeigen. Dabei zeigt

Fig.1a einen Langstatorlinearmotor mit einem Sicherheitsbereich,

Fig.1b einen Planarmotor mit einem Sicherheitsbereich,

Fig.2a, b ein sicheres Blockierelement bei einem Langstatorlinearmotor,

Fig.2c, d ein sicheres Blockierelement bei einem Planarmotor,

Fig.3a, b ein sicheres Umlenkelement bei einem Langstatorlinearmotor,

Fig.3c, d ein sicheres Umlenkelement bei einem Planarmotor,

Fig.4a eine Vollbrücke zur Ansteuerung einer Antriebsspule,

Fig.4b eine Halbbrücke zur Ansteuerung einer Antriebsspule,

Fig.5 einen zeitlichen Verlauf des momentbildenden Kurschlussstromes, des feldbildenden Kurzschlussstromes und des Kurzschlussstroms, von mehreren überdecken Spulen zusammengefasst.

Fig.6 eine Approximation der Bremskraft als Funktion des Kurzschlussstroms,

Fig.7 ein typisches Schaltmuster für das Kurzschlussintervall und das Leerlaufintervall,

Fig.8a und b Verläufe des Kurzschlussintervalls über den Kurzschlussstrom und die Fehlerabweichung

Fig.9 einen zeitlichen Verlauf eines ersten und zweiten Kurschlussstromes mehrerer Antriebsspule und einer ersten und zweiten erzeugten Bremskraft.

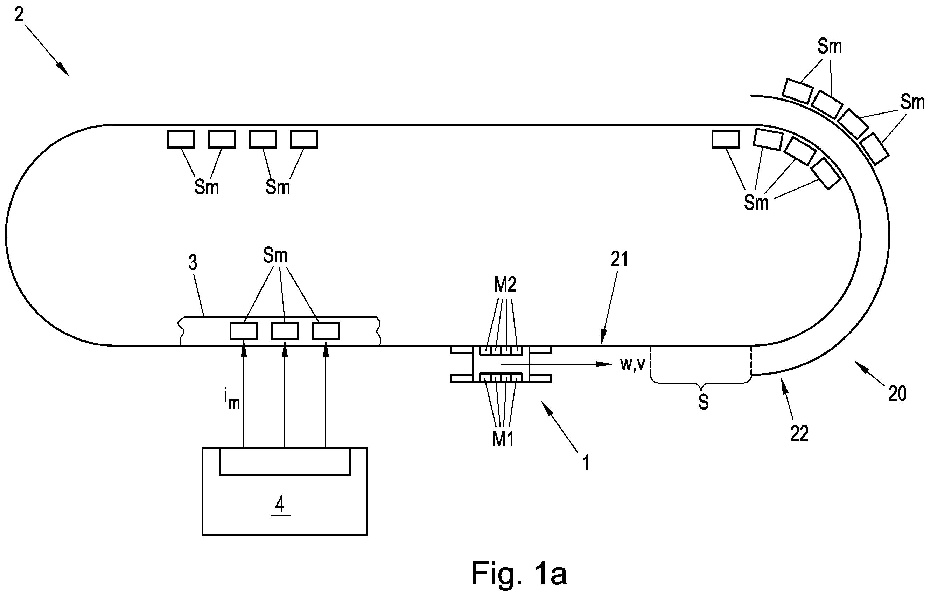

Fig.1a stellt ein einfaches Beispiel eines Langstatorlinearmotors als elektromagnetisches Transportsystem 2 dar. Der Langstatorlinearmotor weist eine geschlossene Transportstrecke als Transportbereich 20 auf. Auf der Transportstrecke sind eine Vielzahl m von Antriebsspulen Sm in Bewegungsrichtung w einer Transporteinheit 1 hintereinander angeordnet, die im Normalbetrieb unter Kontrolle einer Steuerungseinheit 4 (nur für einige Antriebsspulen Sm dargestellt) jeweils mit einem Spulenstrom $i_m$ bestromt werden, um ein bewegtes Magnetfeld zu erzeugen. Die mit $i_m$ gekennzeichneten Pfeile sind dabei natürlich nur schematisch zu sehen. Es können die Antriebsspulen Sm auch auf andere Weise mit der Steuereinheit 4 verbunden sein um die Antriebsspulen Sm mit dem Spulenstrom $i_m$ zu bestromen. Die Steuereinheit 4 kann als geeignete Hardware und/oder als auf einer geeigneten Hardware laufenden Software ausgeführt sein.

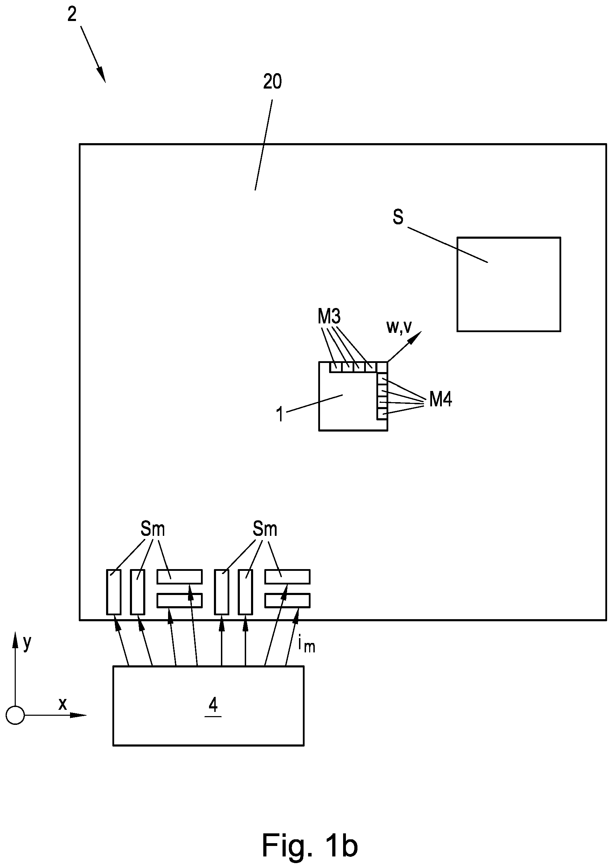

Die in Bewegungsrichtung w nebeneinander angeordneten Antriebsspulen Sm sind an einer ortsfesten Haltekonstruktion 3 (in Fig.1 nur angedeutet) an der Transportstrecke angeordnet. Die Transporteinheiten 1 werden entlang der Transportstrecke in einer Bewegungsrichtung w bewegt, und sind dazu jeweils auf geeignete Weise an der stationär angeordneten Transportstrecke geführt und gehalten.

Eine Transporteinheit 1 weist entlang der Bewegungsrichtung w seitlich angeordnete erste Magnete M1 auf und kann wie in Fig. 1 dargestellt zudem seitlich angeordnete Magnete M2 aufweisen, die sich in einer Querrichtung quer zur Bewegungsrichtung w gegenüber den ersten Magneten M1 befinden können. Weist die Transporteinheit 1 an zwei Seiten jeweils erste Magnete M1 bzw. zweite Magnete M2 auf, so können passend dazu an beiden Seiten der Transportstrecke (in Bewegungsrichtung w gesehen) jeweils Antriebsspulen Sm vorgesehen sein, die mit den jeweiligen Magneten M1, M2 zusammenwirken um eine Bewegung der Transporteinheiten 1 zu verursachen. Zur Bewegung werden vorzugsweise nur die Antriebsspulen Sm im Bereich der Magnete M1, M2 von der Steuerungseinheit 4 mit Strom versorgt, wobei dieser Bereich auch Antriebspulen Sm umfassen kann, die sich vor und/oder nach der Transporteinheit 1 befinden. Selbstverständlich können entlang der Transportstrecke auch mehr als eine Transporteinheit 1 bewegt werden, wobei jede Transporteinheit 1 durch entsprechendes Bestromen der Antriebsspulen Sm im Bereich der Transporteinheit 1 unabhängig von den anderen Transporteinheiten 1 (in Richtung, Position, Geschwindigkeit und Beschleunigung) bewegt werden kann. Um die Position der Transporteinheit 1 am Stator und damit die aktuell zu bestromenden Spulen Sm, die sich entlang der Transportstrecke bei der Transporteinheit 1 befinden. zu bestimmen, können beispielsweise Stromsensoren vorgesehen sein.

Die Transportstrecke kann, je nach Anwendung und Bedarf, beliebig geformt sein und kann geschlossene und/oder offene Streckenabschnitte umfassen. Die Transportstrecke muss nicht in einer Ebene liegen, sondern kann auch beliebig im Raum geführt sein. Üblicherweise besteht eine Transportstrecke aus mehreren zusammengesetzten Transportsegmenten mit jeweils einer Anzahl von Antriebsspulen Sm. Gleichfalls sind auch Weichen bekannt, um eine Transporteinheit 1 von einer ersten Transportstrecke auf eine zweite Transportstrecke zu führen.

Fig.1b stellt ein einfaches Beispiel eines elektromagnetisches Transportsystems 2 als Planarmotor dar. Der Planarmotor weist dabei als Transportbereich 20 eine Transportebene auf. In der Transportebene, hier in der xy-Ebene angelegt, sind eine Vielzahl m von Antriebsspulen Sm angeordnet. Die Antriebspulen Sm sind hier nur beispielhaft in der x-Achse und der y-Achse angeordnet und werden im Normalbetrieb unter Kontrolle einer Steuereinheit 4 (nur für einige Antriebsspulen Sm dargestellt) jeweils mit einem Spulenstrom $i_m$ bestromt, um ein in der Transportebene bewegtes Magnetfeld zu erzeugen. Es können die Antriebsspulen Sm auch auf andere Weise mit der Steuereinheit 4 verbunden sein um die Antriebsspulen Sm mit dem Spulenstrom $i_m$ zu bestromen. Die Steuereinheit 4 kann als geeignete Hardware und/oder als auf einer geeigneten Hardware laufenden Software ausgeführt sein.

Die Antriebsspulen Sm erzeugen in der Transportebene ein Magnetfeld um die Transporteinheiten 1 in der Transportebene zu bewegen. Hierzu weist die Transporteinheit 1 Magnete M3, M4, die vorzugsweise parallel zu den Antriebsspulen Sm angeordnet sind auf. In der dargestellten Ausführung sind die Magnete M3 in der x-Achse und die Magnete M4 in der y-Achse angeordnet. Zur Bewegung der Transporteinheit 1 werden vorzugsweise nur die Antriebsspulen Sm im Bereich der Magnete M3, M4 von der Steuereinheit 4 mit Strom versorgt, wobei dieser Bereich auch Antriebspulen Sm umfassen kann, die sich vor und/oder nach und/oder seitlich von der Transporteinheit 1 befinden. Durch geeignete Ansteuerung der Antriebsspulen Sm kann die Transporteinheit 1 auch in einer Bewegungsrichtung w, die nicht parallel zu einer der Achsen der Transportebene liegt, bewegt werden, wie es auch in den Figuren dargestellt ist. Selbstverständlich können in der Transportebene auch mehr als eine Transporteinheit 1 bewegt werden, wobei jede Transporteinheit 1 durch entsprechendes Bestromen der Antriebsspulen Sm im Bereich der Transporteinheit 1 unabhängig von den anderen Transporteinheiten 1 (in Richtung, Position, Geschwindigkeit und Beschleunigung) bewegt werden kann. Um die Position der Transporteinheit 1 in der Transportebene und damit die aktuell zu bestromenden Spulen Sm, die sich im Transportbereich 20 bei der Transporteinheit 1 befinden. zu bestimmen, können beispielsweise Stromsensoren vorgesehen sein. Die Transportebene kann, je nach Anwendung und Bedarf, beliebig geformt sein und kann auch beliebig im Raum geführt sein. Weiters besteht die Transportebene oftmals aus mehreren aneinander angeordneten Transportsegmenten.

Die für die Bewegung einer Transporteinheit 1 eines elektromagnetischen Transportsystems 2 benötigte Vortriebskraft wird bekanntermaßen von der vortriebskraftbildenden Stromkomponente iq (q-Komponente) eines Antriebstromes $i_A$ gebildet. Der Antriebstrom $i_A$ entspricht dem vektoriellen Summenstrom aller Spulenströme $i_m$ der auf die Transporteinheit 1 wirkenden Antriebsspulen Sm.

Ist ein Langstatorlinearmotor als Transportsystem vorgesehen, so ist der Antriebsstrom ein Stromvektor mit einer q- und einer d-Komponente (normalkraftbildende Stromkomponente). Ist ein Planarmotor als Transportsystem vorgesehen, so ist der Antriebsstrom ein Stromvektor mit zwei q-Komponenten und einer d-Komponente (normalkraftbildende Stromkomponente).

Für die normale Vorwärtsbewegung der Transporteinheit 1 reicht/reichen somit die vortriebskraftbildende Stromkomponente/n iq (q-Komponente/n) aus. Die nicht der Vorwärtsbewegung dienende Normalkraft wird von der normalkraftbildenden Stromkompente id (d-Komponente) des Antriebstromes $i_A$ gebildet.

In einem Langstatorlinearmotor bzw. Planarmotor wirken meist mehrere Antriebsspulen Sm gleichzeitig auf die Transporteinheit 1 um eine Bewegung mit der Geschwindigkeit v in der Bewegungsrichtung w zu erzielen. Wenn keine d-Komponenten vorhanden sind, entspricht die vortriebskraftbildende Stromkomponente iq dem vektorieller Summenstrom aller Spulenströme $i_m$ der auf die Transporteinheit 1 wirkenden Antriebsspulen Sm. Die in der Steuereinheit 4 berechnete vortriebskraftbildende Stromkomponente iq muss daher noch auf die tatsächlich wirkenden Spulenströme $i_m$ der Antriebsspulen Sm umgerechnet und aufgeteilt und daran angelegt werden, was hinlänglich bekannt ist.

Es ist im Transportbereich 20 in Bewegungsrichtung w vor der Transporteinheit 1 ein Sicherheitsbereich S vorgesehen. Dieser Sicherheitsbereich 20 kann im Transportbereich 20 ortsfest vorgesehen sein und beispielsweise ein Transportsegment des Transportbereichs 20 umfassen. Natürlich ist es auch möglich, dass ein Sicherheitsbereich S einen fest vorgegebenen oder flexibel bestimmten Teil des im Transportbereichs 20 vor oder nach einem Transportsegment umfasst oder erst nach einem fest vorgegebenen oder flexibel bestimmten Abstand vor oder nach einem Transportsegment beginnt.

Der Sicherheitsbereich S kann bei einem Planarmotor als elektromagnetisches Transportsystem 2 auch den vorgesehenen Arbeitsbereich, in welchem sich die Transporteinheit 1 bewegen darf, umschließen. Damit kann ein Herausbewegen einer Transporteinheit 1 aus der Transportebene verhindert werden.

Ein Sicherheitsbereich kann auch durch andere Begrenzungen aufweisen als nicht sichere Bereiche: Andere Maximalgeschwindigkeiten, andere Maximalströme, andere Minimalabstände zwischen Shuttles.

Der Sicherheitsbereich S kann auch rein von der Position der Transporteinheit 1 abhängig sein. So kann ein sicherer Verzögerungsbereich V der Transporteinheit 1 vorgesehen sein, wobei der Sicherheitsbereich S nach dem sicheren Verzögerungsbereich V beginnt. Ebenso kann der Sicherheitsbereich S auch von der Position eines Individuums abhängig sein.

Ist ein Langstatorlinearmotor als elektromagnetisches Transportsystem 2 vorgesehen, so kann der Sicherheitsbereich S als Abschnitt der Transportstrecke angesehen werden, wie in Fig. 1a dargestellt. Ist ein Planarmotor als elektromagnetisches Transportsystem 2 vorgesehen, so kann der Sicherheitsbereich S als flächenförmiger Unterbereich der Transportebene angesehen werden, wie in Fig. 1b dargestellt.

Als Mischform kann der Sicherheitsbereich S auch grundlegend von der Position der Transporteinheit 1 abhängig sein, jedoch in Bezug auf Eigenschaften des Transportbereichs 20 festgelegt werden. So kann beispielsweise ein in Bewegungsrichtung w vor der Transporteinheit 1 liegendes Transportsegment, beispielsweise das nächste in Bewegungsrichtung w vor der Transporteinheit 1 liegendes Transportsegment als Sicherheitsbereich S definiert werden. Damit ist der Sicherheitsposition S von der Position der Transporteinheit 1, als auch von der Anordnung des Transportsegments abhängig. Auch hier ist es möglich, dass ein Sicherheitsbereich S einen fest vorgegebenen oder flexibel bestimmten Teil des Transportbereichs 20 vor oder nach einem Transportsegment, welches in Bewegungsrichtung w vor der Transporteinheit 1 liegt, umfasst. Ebenso kann ein Sicherheitsbereich S erst nach einem fest vorgegebenen oder flexibel bestimmten Abstand vor oder nach einem Transportsegment, welches in Bewegungsrichtung w vor der Transporteinheit 1 liegt, beginnen.

Erfindungsgemäß ist ein Sicherheitsmodul M zur Realisierung einer Sicherheitsfunktion vorgesehen. Das Sicherheitsmodul M, bzw. die Sicherheitsfunktion stellt je nach Ausführung entweder entsprechend einer vorgegebenen Sicherheitsanforderungsstufe (SIL) sicher, dass die Transporteinheit 1 den Sicherheitsbereich S mit einer Geschwindigkeit v kleiner gleich einer Sicherheitsgeschwindigkeit v_S erreicht oder verhindert entsprechend einer vorgegebenen Sicherheitsanforderungsstufe, dass die Transporteinheit 1 den Sicherheitsbereich S erreicht. Die Sicherheitsfunktion kann permanent aktiv sein. Beispielhaft wird in den dargestellten Ausführungsbeispielen die Sicherheitsfunktion durch ein Auslösen eines Sicherheitszustands N aktiviert.

Eine Transporteinheit 1, welche sich mit einer Geschwindigkeit v bewegt, weist aufgrund seiner Masse m einen entsprechenden Impuls auf, welche zu einer Impulskraft führt. Ist die Geschwindigkeit v kleiner gleich einer Sicherheitsgeschwindigkeit v_S, so ist auch der Impuls kleiner gleich eines Sicherheitsimpulses und bei Wechselwirkung der Transporteinheit 1 mit einem Objekt oder Subjekt die Impulskraft kleiner gleich einer Sicherheitsimpulskraft. Die Transporteinheit 1 wird von der Motorkraft $F_m$ angetrieben, die sich aus dem Produkt der vortriebskraftbildenden Stromkomponente iq und einer Konstanten ki ergibt. Es können noch weitere Kräfte, z.B. eine Reibkraft $F_f$, eine Gravitationskraft $F_g$, etc. auf die Transporteinheit 1 wirken, welche in Summe zu einer auf die Transporteinheit 1 wirkenden Gesamtkraft $F_t$ führen. Die Bewegungsgleichung einer ungestört bewegten Transporteinheit 1 kann beispielsweise wie folgt dargestellt werden: $m * a = F_t = F_m - F_g - F_f$, wobei die Motorkraft $F_m$, Die Gravitationskraft $F_g$ und die Reibkraft $F_f$ in Summe als Transporteinheitskraft $F_1$ betrachtet werden können. Tritt die Transporteinheit 1 in Kontakt mit einem Objekt oder Subjekt (beispielsweise durch Kollision), so wirkt auf die Transporteinheit 1 zudem eine Wechselwirkungskraft $F_e$, womit die Bewegungsgleichung $m * a = F_t = F_m - F_g - F_f - F_e = F_1 - F_e$, gilt. Die Wechselwirkungskraft $F_e$ kann mit mit einer Eindringtiefe $x_e$ und einer Federsteifigkeit $k_e$ des Objekts oder Subjekt als $F_e = - k_e x_e$ modelliert werden.

Um die Wechselwirkungskraft $F_e$ (und damit die Eindringtiefe $x_e$) zu begrenzen kann die Geschwindigkeit v auf einen Wert kleiner gleich der Sicherheitsgeschwindigkeit v_S limitiert werden. Es kann jedoch auch zusätzlich oder stattdessen eine Limitierung der Transporteinheitskraft $F_1$ kleiner einer Sicherheitskraft F_S Kraft erfolgen. Ebenso kann die (kinetische) Transporteinheitsenergie $E_1$ der Transporteinheit ($m*v^2/2$) auf einen Wert kleiner gleich einer Sicherheitsenergie E_s limitiert werden. Damit wird eine auf die Transporteinheit wirkende Wechselwirkungsenergie begrenzt.

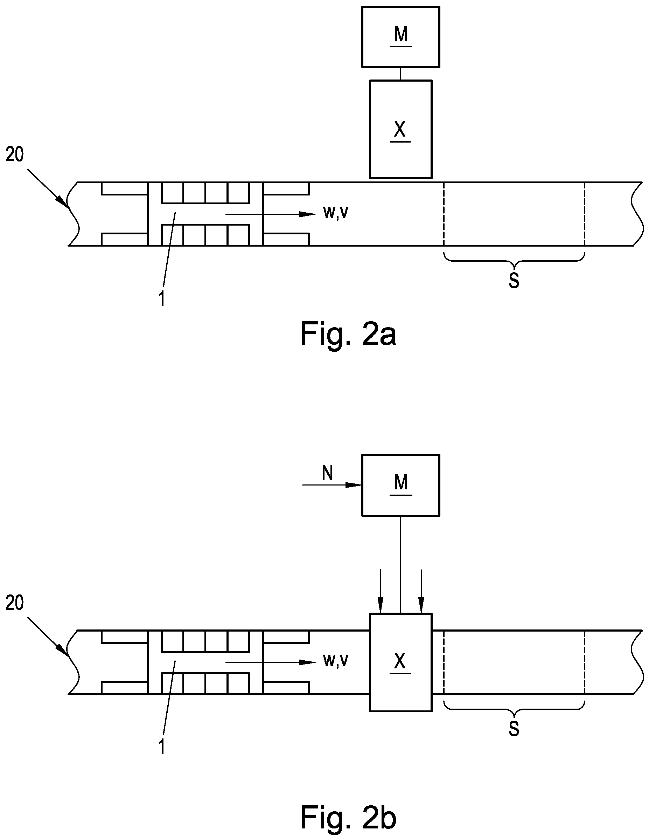

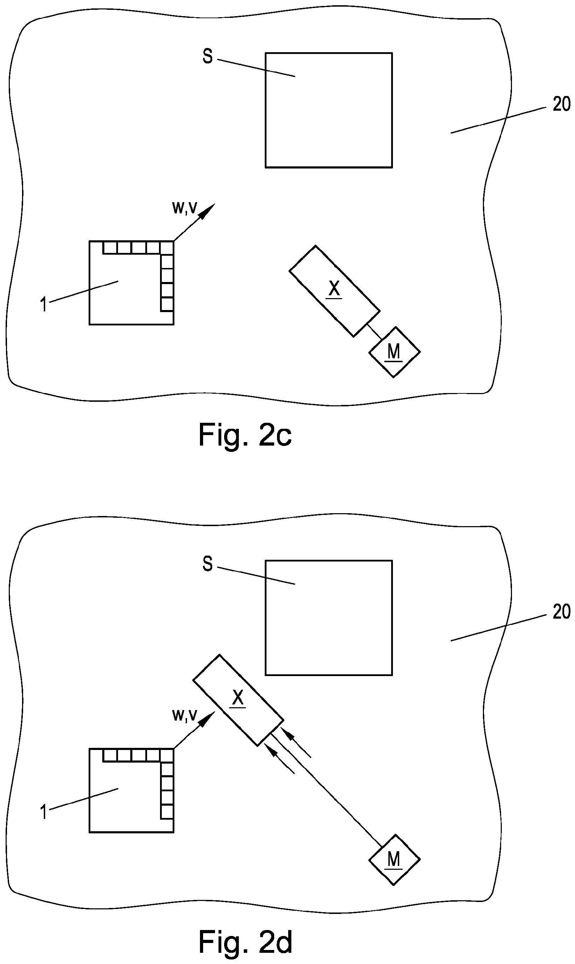

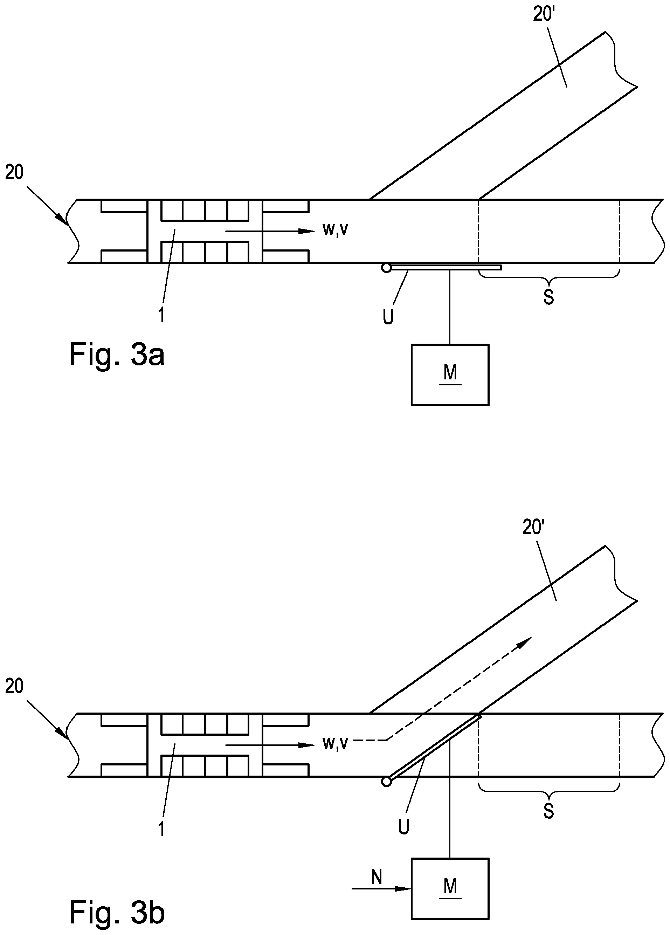

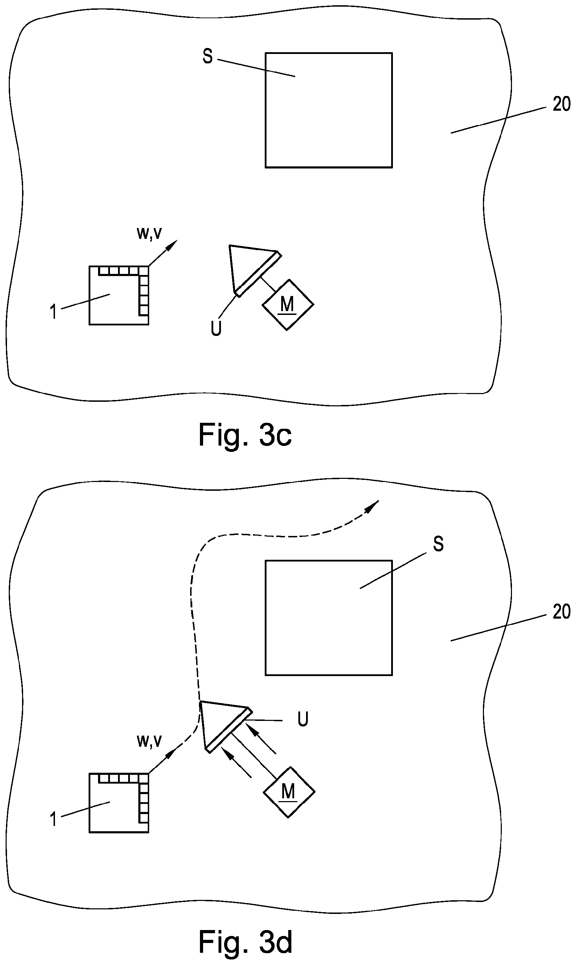

Ein Erreichen des Sicherheitsbereichs S durch die Transporteinheit 1 kann durch ein an der Transporteinheit 1 und/oder im Transportbereich 20 angeordnetes Blockierelement X (Fig. 2) und/oder durch ein an der Transporteinheit 1 und/oder im Transportbereich 20 angeordnetes Umlenkelement U (Fig. 3) verhindert werden.

Fig. 2a, b und Fig., 3a, b betrifft einen Langstatorlinearmotor als elektromagnetisches Transportsystem 2, wobei eine Transportstrecke als Transportbereich 20 dient. Es wird dabei lediglich ein Abschnitt der Transportstrecke dargestellt, wobei ein in Bewegungsrichtung w vor der Transporteinheit 1 angeordneter Sicherheitsbereich S vorgesehen ist.

Fig. 2c, d und Fig., 3c, d betrifft einen Planarmotor als elektromagnetisches Transportsystem 2, wobei eine Transportebene als Transportbereich 20 dient. Es wird dabei lediglich ein Abschnitt der Transportebene dargestellt, wobei ein in Bewegungsrichtung w vor der Transporteinheit 1 angeordneter Sicherheitsbereich S vorgesehen ist.

In Fig. 2a, b, c, d umfasst das Sicherheitsmodul M ein Blockierelement X. In Fig. 2a und Fig. 2c ist kein Sicherheitszustand N ausgelöst, weshalb sich das Blockierelement X in einer Ruheposition befindet. Die Ruheposition befindet sich nicht in der Bewegungsrichtung w und blockiert damit die Transporteinheit 1 nicht, womit sich die Transporteinheit 1 ungehindert in Bewegungsrichtung w fortbewegen kann. In Fig. 2b und 2d ist hingegen ein Sicherheitszustand N ausgelöst und damit eine Sicherheitsfunktion aktiviert, weshalb das Blockierelement X in eine Blockierposition gebracht wird, welche sich im Transportbereich 20 aus Sicht der Transporteinheit 1 in Bewegungsrichtung w vor dem Sicherheitsbereich S befindet. Damit wird die Transporteinheit 1 physisch daran gehindert in den Sicherheitsbereich S vorzudringen und stattdessen noch vor einem Erreichen des Sicherheitsbereichs S durch das Blockierelement X blockiert und zu Stillstand gebracht. Es ist dabei wesentlich, dass diese Blockierung durch das Sicherheitsmodul M und das davon umfasste Blockierelement X entsprechend einer vorgegebenen Sicherheitsanforderungsstufe sichergestellt wird.

Das Blockierelement X kann seitlich in die Bewegungsrichtung w, aber auch von oben oder unten auf den Transportbereich 20 und in die Bewegungsrichtung w eingefahren bzw. aus dem Transportbereich 20 n die Bewegungsrichtung w ausgefahren werden. Ebenso kann das Blockierelement X an der Transporteinheit 1 selbst angeordnet sein, beispielsweise in Form von ausfahrbaren Krallen, einer Vorrichtung zum Vergrößern der mechanischen Breite, die zu einem Blockieren der Transporteinheit 1 im Transportbereich 20 führt, etc.

In Fig. 3a, b, c, d umfasst das Sicherheitsmodul M ein Umlenkelement U. In Fig. 3a und Fig. 3c ist kein Sicherheitszustand N ausgelöst und damit keine Sicherheitsfunktion aktiviert, weshalb sich das Umlenkelement U in einer Ruheposition befindet. Diese Ruheposition befindet sich abseits der Bewegungsrichtung w, womit die Transporteinheit 1 sich weiterhin ungehindert in der Bewegungsrichtung w fortbewegen kann. In Fig. 3b und 3d ist jedoch ein Sicherheitszustand N ausgelöst und damit eine Sicherheitsfunktion aktiviert, weshalb das Umlenkelement U in eine Umlenkposition gebracht wird, welche sich im Transportbereich 20 in Bewegungsrichtung w vor dem Sicherheitsbereich S befindet. Durch das Umlenkelement U in der Umlenkposition wird die Transporteinheit 1 von der Bewegungsrichtung w abgelenkt. Damit wird die Transporteinheit 1 physisch daran gehindert in den Sicherheitsbereich S vorzudringen. Es ist auch hier wesentlich, dass dieses Umlenken durch das Sicherheitsmodul M und das davon umfasste Umlenkelement U entsprechend einer vorgegebenen Sicherheitsanforderungsstufe sichergestellt wird.

Umlenkelemente U müssen keine derart hohe kinetische Energie der Transporteinheit 1 absorbieren, wie es für Blockierelemente X der Fall ist, da sie die Transporteinheit 1 nicht vollständig stoppen. Daher können Umlenkelemente U insbesondere bei Transporteinheiten 1, welche eine hohe Geschwindigkeit v aufweisen, bzw. erwarten lassen, eingesetzt werden.

In einem Langstatorlinearmotor als elektromagnetisches Transportsystem 2 können als Umlenkelemente U bereits an der Transportstrecke vorgesehene Weichen eingesetzt werden, womit die Transporteinheit 1 in einen alternativen Teil der Transportstrecke 20' umgelenkt wird, welcher keinen Sicherheitsbereich S aufweist, wie auch in Fig. 3b dargestellt.

Blockierelemente X und/oder Umlenkelemente U sind vorzugsweise ortsfest im Transportbereich 20 vorgesehen, können jedoch auch im Transportbereich 20 verschiebbar vorgesehen sein und somit auch variable, d.h. nicht ortsfeste, Sicherheitsbereiche S absichern. Blockierelemente X und Umlenkelemente U werden insbesondere vor Sicherheitsbereichen S, welche einer hohen Sicherheitsanforderungsstufe genügen müssen, eingesetzt.

Natürlich ist es auch vorstellbar, dass ein Sicherheitsmodul M ein oder mehrere Umlenkelemente U und ein oder mehrere Blockierelemente X umfasst. Es können auch ein Umlenkelement U und ein Blockierelement X in Bezug auf einen Sicherheitsbereich S eingesetzt werden, indem die Transporteinheit 1 vor Erreichen des Sicherheitsbereichs S umgelenkt wird und daraufhin durch ein Blockierelement X blockiert wird. Bei ausreichender Auslaufzeit der Transporteinheit 1 nach dem Umlenken durch das Umlenkelement U kann gewährleistet werden, dass die Transporteinheit 1 bei einer darauffolgenden Blockierung der Transporteinheit 1 durch das Blockierelement X eine geringere kinetische Energie aufweist, als bei einer sofortigen Blockierung.

Das Sicherheitsmodul M kann ein an der Transporteinheit 1 und/oder im Transportbereich 20 angeordnetes Bremselement E umfassen. Das Bremselement E kann ausgestaltet sein im Rahmen der Sicherheitsfunktion, z.B. nach Aktivierung selbiger durch Auslösen eines Sicherheitszustands N, mit einer vorgegebenen Sicherheitsanforderungsstufe sicherzustellten, dass die Bewegung der Transporteinheit 1 derart gebremst wird, dass sie den Sicherheitsbereich S mit einer Geschwindigkeit v kleiner gleich einer Sicherheitsgeschwindigkeit v_S erreicht oder sicherzustellen, dass die Transporteinheit 1 vor Erreichen des Sicherheitsbereich S zum Stillstand gerät. Das Bremselement E muss entsprechend der vorgegebenen Sicherheitsanforderungsstufe ausgeführt und dimensioniert sein.

Das Bremselement E kann mechanisch auf die Transporteinheit 1 wirken, beispielsweise durch Erhöhung einer Reibkraft zwischen der Transporteinheit 1 und dem Transportbereich 20. Dies kann beispielsweise erfolgen, indem im Transportbereich 20 Oberflächen mit hohem Reibkoeffizient vorgesehen sind und/oder indem eine auf die Transporteinheit 1 wirkende Normalkraft aktiv erhöht wird.

Auch kann das Bremselement E magnetisch auf die Transporteinheit 1 wirken. So kann beispielsweise ein Magneteinheit oder eine Eiseneinheit vorgesehen sein um die Transporteinheit 1 über die magnetische Krafteinwirkung zu verzögern.

Das Bremselement E kann somit beliebige Wirkmechanismen zur Kraftübertragung auf die Transporteinheit 1 verwenden, beispielsweise kann auch ein erhöhter Luftwiderstand, beispielsweise durch Einblasen von Druckluft zum Bremsen der Transporteinheit verwendet werden.

Die in Kombination mit einem Blockierelement E genannten Wirkmechanismen zur Kraftübertragung können gleichermaßen in einem Umlenkelement U verwendet werden, um die Transporteinheit 1 umzulenken,

Die Sicherheitsfunktion kann im Rahmen der Sicherheitsfunktion, z.B. nach Aktivierung selbiger durch Auslösen des Sicherheitszustands N, auch sicherstellen, dass zumindest ein erster Teil der Antriebspulen Sm zumindest über einen Zeitabschnitt in einem Kurzschluss betrieben wird. Die Sicherheitsfunktion kann im Rahmen der Sicherheitsfunktion, z.B. nach Aktivierung selbiger durch Auslösen des Sicherheitszustands N, auch sicherstellen, dass zumindest ein zweiter Teil der Antriebspulen Sm zumindest über einen Zeitabschnitt in einem Leerlauf betrieben wird. Dies ist insbesondere in Kombination mit einem oder mehreren hier genannten Ausgestaltungen (Bremselement E, Blockierelement X, Umlenkelement U) vorteilhaft.

Sowohl für einen Betreib im Kurzschluss, als auch im Betrieb im Leerlauf entsprechend der Sicherheitsfunktion muss die Sicherstellung mit entsprechend vorgegebenen Sicherheitsanforderungsstufe erfolgen, und zwar derart, dass die Transporteinheit 1 den Sicherheitsbereich S mit einer Geschwindigkeit v kleiner gleich einer Sicherheitsgeschwindigkeit v_S erreicht oder verhindert, dass die Transporteinheit 1 den Sicherheitsbereichs S erreicht. Hierzu kann die Sicherheitsfunktion, bzw. das Sicherheitsmodul M auf die Steuereinheit 4 zugreifen oder auch Teil der Steuereinheit 4 sein.

Im Rahmen der Sicherheitsfunktion kann eine Transporteinheit 1 vor Erreichen des Sicherheitsbereichs S vollständig oder bis zum Erreichen des Sicherheitsbereichs S auf eine Sicherheitsgeschwindigkeit v_S abgebremst werden, indem entsprechende Antriebsspulen Sm, z.B. die mit der Transporteinheit 1 zusammenwirkenden, oder alle Antriebsspulen Sm, oder beispielsweise in Bewegungsrichtung w angeordnete Antriebsspulen Sm, etc., kurzgeschlossen werden. Hierzu werden beispielsweise die Schalter der Vollbrücken VB/Halbbrücken HB von der Steuereinheit 4 in die geeignete Stellung gebracht, was beispielsweise durch einen des Sicherheitsmoduls M zugehörigen Kurzschlussreglers initiiert werden kann. Der Kurzschluss kann aber natürlich noch auf andere Weise erzeugt werden, beispielsweise durch einen Schalter parallel zu den Antriebsspulen Sm. "Kurzgeschlossen" kann bei Verwendung von Vollbrücken in der Steuereinheit 4 einen satten Kurzschluss bedeuten.

Besonders vorteilhaft ist es, wenn im Rahmen der Sicherheitsfunktion, z.B. durch Aktivierung selbiger durch Auslösen des Sicherheitszustands N, zumindest ein Teil der Antriebspulen Sm zumindest über einen ersten Zeitabschnitt in einem Kurzschluss betrieben werden, wobei besonders vorzugsweise der zumindest eine Teil der Antriebspulen Sm zumindest über einen zweiten Zeitabschnitt in einem Leerlauf betrieben wird um einen geregelten Kurzschluss zu erzeugen. Damit kann ein besonders effizienter Bremsvorgang der Transporteinheit 1 erzeugt werden.

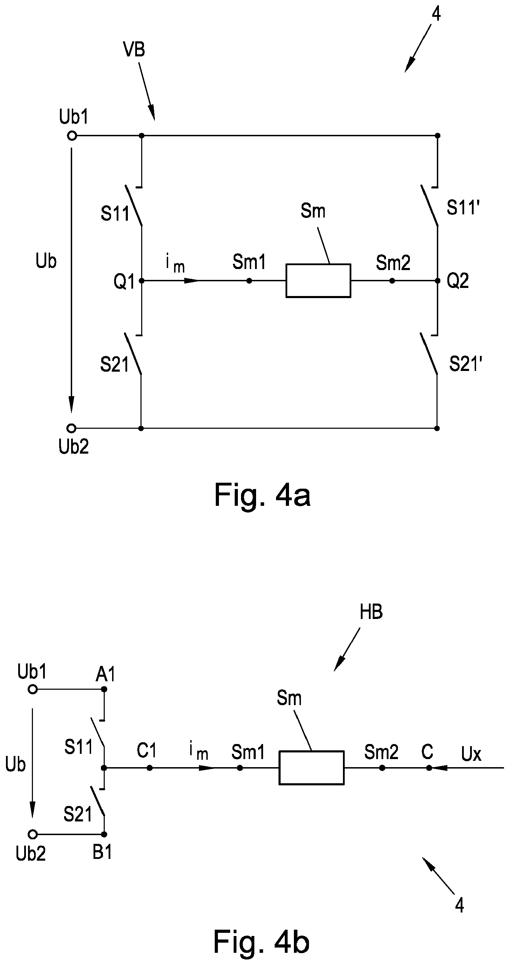

Fig.4a zeigt eine Vollbrücke VB zum Bestromen einer Antriebsspule Sm mit einem Spulenstrom $i_m$. Die Antriebsspule Sm weist einen ersten Spulenanschluss Sm1 und einen zweiten Spulenanschluss Sm2 auf. Die Vollbrücke VB besteht aus zwei Hauptzweigen, wobei der erste Hauptzweig aus zwei Schaltern S11, S21 besteht, die in Serie an einer Betriebsspannung Ub liegen, welche durch die Differenz aus einem ersten Betriebspotential Ub1 und einem zweiten Betriebspotential Ub2 an den Eingangsanschlüssen der Vollbrücke VB gebildet wird. Auch der zweite Hauptzweig besteht aus zwei Schaltern S11', S21', die in Serie an der Betriebsspannung Ub liegen. Zwischen dem Verbindungspunkt des ersten Schalters S11 und des zweiten Schalters S21 des ersten Hauptzweiges befindet sich der erste Queranschluss Q1 für einen Querzweig. Äquivalent befindet sich zwischen dem Verbindungspunkt des ersten Schalters S11' und des zweiten Schalters S21' des zweiten Hauptzweiges der zweite Queranschluss Q2 des Querzweigs. Der erste Spulenanschluss Sm1 der Antriebsspule Sm ist mit dem ersten Queranschluss Q1 verbunden, der zweite Spulenanschluss Sm2 der Antriebsspule Sm ist mit dem zweiten Queranschluss Q2 verbunden. Durch geeignetes Ansteuern der Schalter S11, S21, S11', S21' durch die Steuerungseinheit 4 (hier nicht eingezeichnet) kann zwischen erstem Spulenanschluss Sm1 und zweitem Spulenanschluss Sm2 das gleiche elektrische Potential anliegt, während der Spulenstrom $i_m$ fließt. Bei einem satten Kurzschluss werden somit die Schalter S11 und S11'durchgeschaltet (bei offenen Schaltern S21 und S21') oder die Schalter S21, S21' durchgeschaltet (bei offenen Schaltern S11, S11').

Es können von der Steuereinheit 4 auch Halbbrücken HB angesteuert werden um die Antriebsspulen Sm mit einem Spulenstrom $i_m$ zu bestromen, beispielsweise wie in Fig. 4b dargestellt. Es wird dabei auf den zweiten Hauptzweig der Vollbrücke VB verzichtet, womit die Betriebsspannung Ub nur am ersten Hauptzweig, zwischen dem ersten Eingangsanschluss A1 und zweitem Eingangsanschluss B1 und dem dazwischen in Serie geschalteten ersten Schaltern S11 und zweiten Schalter S21 anliegt. Der Verbindungspunkt zwischen erstem S11 und zweitem Schalter S21 wird als Mittelpunkt C1 bezeichnet und ist mit dem ersten Anschluss Sm1 der Antriebsspule Sm verbunden. Der zweite Anschluss L12 der Antriebsspule Sm liegt auf einem, z.B. von einer Potentialregelungseinheit vorgegebenen, elektrischen Potential Ux an einem Regelungspunkt C. Üblicherweise sind die zweiten Anschlüsse Sm2 aller (hier nicht eingezeichneten) Antriebsspulen Sm mit dem Regelungspunkt C verbunden und werden auf das elektrische Potential Ux geregelt, das üblicherweise der halben Betriebsspannung Ub entspricht.

Ein direkter Kurzschluss der Antriebsspule Sm durch die beiden Schalter S11 und S12 ist bei Verwendung einer Halbbrücke HB nicht möglich, da die Schalter S11 und S21 nie gleichzeitig geschlossen sein dürfen. Um die Betriebsspannung Ub nicht kurzzuschließen ist bei Verwendung von Halbbrücken HB somit ein "PWM-Kurzschluss" vorgesehen. Ein PWM-Kurzschluss bedeutet, dass jeweils der obere Schalter S11 und der unteren Schalter S21 einer Halbbrücke HB abwechselnd geschaltet werden, beispielsweise mittels einer 50/50-Taktung über Periodendauer T. Damit herrscht an beiden Anschlüssen Sm1, Sm2 der Antriebsspule Sm das gleiche Potential Ux - analog zur in Fig. 4a dargestellten Vollbrücke VB, bei welcher sich bei einem satten Kurzschluss beide Spulenanschlüsse Sm1, Sm2 entweder auf dem ersten Betriebspotential Ub1 oder dem zweiten Betriebspotential Ub2 befinden. Beim Wechsel der geschlossenen/geöffneten Schalter einer Halbbrücke HB kann eine minimale Schutzzeit eingehalten werden um eventuell vorhandene Restladungen auszuräumen.

Ein PWM-Kurzschluss entspricht zu keinem Zeitpunkt einem satten Kurzschluss, kann jedoch über ein zeitliches Integral der Spulenspannung über einen Schaltzyklus als Kurzschluss interpretiert werden. Dabei werden die betreffenden Antriebsspulen Sm natürlich nicht mehr von der Regelungseinheit R mit dem Spulenstrom $i_m$ versorgt. Es entsteht in den mit der Transporteinheit 1 gekoppelten Antriebsspulen Sm jedoch aufgrund der weiteren Bewegung in Bewegungsrichtung w jeweils ein Spulenkurzschlussstrom icm aufgrund einer durch eine EMK (Elektro-Magnetischen-Kraft) induzierten Spannung.

Da der Statorstrom $i_A$ (im dq-Koordinatensystem) dem vektoriellen Summenstrom aller Spulenströme $i_m$ entspricht, ergibt sich auch der Kurzschlussstrom ic (im dq-Koordinatensystem) als vektorielle Summe der Spulenkurzschlussströme icm. Fig. 3 zeigt den zeitlichen Verlauf eines Kurzschlussstromes ic bei einem dauerhaften Kurzschluss während eines Bremsvorgangs. Es ist ersichtlich, dass der Kurzschlussstrom ic ab dem Bremszeitpunkt O anfangs einen klassischen Verlauf eines Kurzschlussstroms ic eines Stators mit Schwingverhalten aufweist. So tritt nach einem subtransienten Verlauf ein transienter Verlauf ein, woraufhin schließlich ein annähernd konstanter Verlauf folgt, welcher wiederum schlussendlich abfällt und gegen Null strebt. Dieser Abfall wird dadurch hervorgerufen, dass die treibende Elektro-Magnetische-Kraft (EMK) verringert wird, da die Geschwindigkeit der Transporteinheit 1 zu diesem Zeitpunkt bereits gering ist.

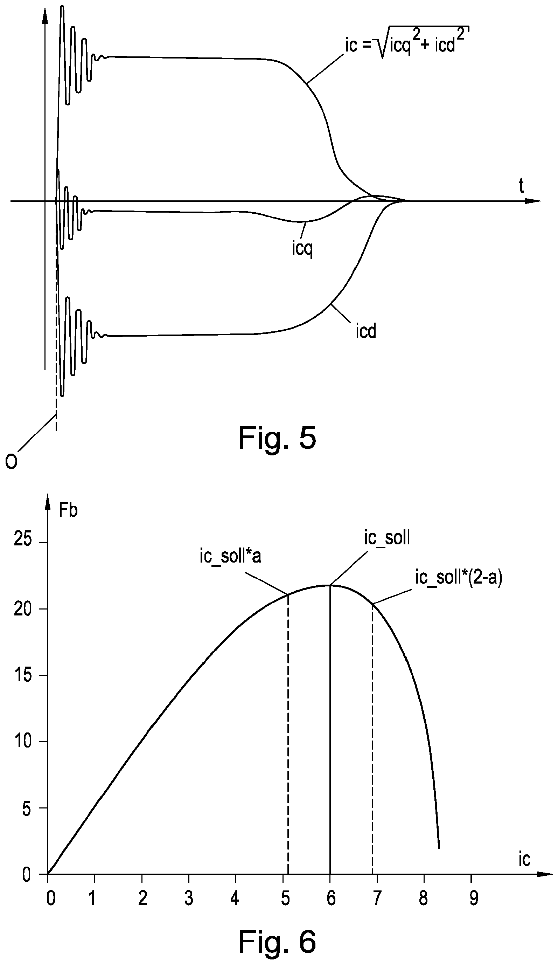

Ebenso abgebildet sind in Fig. 5 der Verlauf der vortriebskraftbildenden Kurzschlussstromkomponente icq und der feldbildende, d.h. in Feldrichtung zeigende, Kurzschlussstromkomponente icd, des Kurzschlussstroms ic. Die vortriebskraftbildende Kurzschlussstromkomponente icq ist dabei in gleicher Weise für die Bremsung der Transporteinheit 1 verantwortlich, wie es die vortriebskraftbildende Stromkomponente iq im Normalbetrieb für die Bewegung der Transporteinheit 1 in Bewegungsrichtung w ist. Daher ist es wünschenswert die vortriebskraftbildende Kurzschlussstromkomponente icq während eines geregelten Kurzschlussmodus K zusätzlich zu vergrößern, bzw. zu maximieren. Diese Vergrößerung der vortriebskraftbildenden Kurzschlussstromkomponente icq erfolgt durch geeignete Wahl der Kurzschluss- und Leerlaufphasen.

Es kann eine Abschätzung des Zusammenhangs zwischen vortriebskraftbildender Stromkomponente iq als Funktion des gesamten Kurzschlussstromes ic gebildet werden, ohne eine zusätzliche Information bezüglich der Position bzw. Winkel zu benötigen. Hierzu wird von für eine mehrphasige Anspeisung gebildeten Ständerspannungsgleichungen ausgegangen. Es werden die Ständergleichungen nach der Geschwindigkeit aufgelöst und der stationäre Fall (d.h. keine Änderungen über die Zeit, was wiederum eine Geschwindigkeit von Null bedeutet) angenommen. Unter Berücksichtigung des Zusammenhangs $ic = \sqrt{icq^2 + icd^2}$ werden die

$$iq = ic\sqrt{1 - ic^2 \left(\frac{L}{\Psi}\right)^2}$$

Ständergleichungen nach auf-gelöst. Der Fluss des Permanentmagneten $\Psi$ kann näherungsweise als konstant angenommen werden. Der dadurch ermittelte Zusammenhang wird in die Kraftgleichung einsetzt, woraufhin die Kraftgleichung nach dem Kurzschlussstrom ic ableitet wird. Ein Nullsetzen der abgeleiteten Kraftgleichung entspricht einem optimalen Zusammenhang von vortriebskraftbildender Stromkomponente iq zum gesamten Kurzschlussstrom ic, d.h. einer Maximierung der vortriebskraftbildenden Stromkomponente iq. Daraus kann die Beziehung f für den optimalen Soll-Kurzschlussstrom ic_soll abgeleitet werden:

$$ic\_soll = \frac{1}{\sqrt{2}} \frac{\Psi}{L}.$$

Der optimale Soll-Kurzschlussstrom ic_soll mit einer maximalen vortriebskraftbildenden Kurzschlussstromkomponente icq kann somit ausgehend von den Ständerspannungsgleichungen nach der Beziehung f:

$$ic\_soll = \frac{1}{\sqrt{2}}\frac{\Psi}{L}$$ ermittelt werden.

Die entsprechenden Werte für die Induktivität L und den Fluss $\Psi$, können beispielsweise durch Versuche bestimmt werden.

In Fig. 6 ist der approximierte Zusammenhang der Bremskraft Fb als Funktion des Kurschlussstromes ic für eine gewisse Geschwindigkeit der Transporteinheit 1 dargestellt, wobei auf der Abszisse der Kurzschlussstrom ic aufgetragen ist und auf der Ordinate die wirkende Bremskraft Fb. Der optimale Soll-Kurzschlussstrom ic_soll ist ebenso eingezeichnet und stellt den Kurzschlussstrom ic dar, der eine maximale Bremskraft Fb ergibt, da die vortriebskraftbildende Kurzschlussstromkomponente icq maximiert ist.

Um zu Beginn eines Bremsvorgangs, aber auch in jedem Zyklus nach dem Start des Bremsvorgangs den Ist-Kurzschlussstrom ic zu bestimmen, können alle Antriebsspulen Sm, die Antriebsspulen Sm eines Segments, oder nur die mit der Transporteinheit 1 gekoppelten Antriebsspulen Sm (sofern bekannt) für einen kurzen Zeitraum kurzgeschlossen werden. Der Kurzschlussstrom ic kann als vektorielle Summe der Spulenkurzschussströme icm, die gemessen werden, berechnet werden.

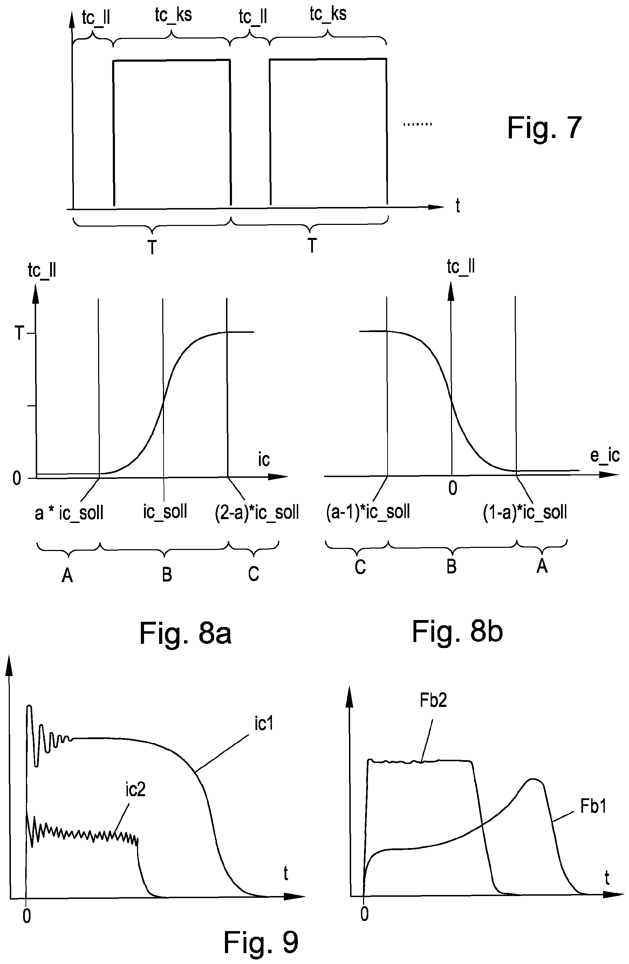

Fig. 7 zeigt eine typische Periode T, in welcher sich Kurzschlussintervall tc_ks und Leerlaufintervall tc_ll abwechseln. Die Periode T ist hier beispielhaft als konstant angenommen, kann aber natürlich auch variieren.

Bei Verwendung einer Vollbrücke VB (vgl. Fig 2a) sind die Schalter S11, S21, S11', S21' im Leerlaufintervall tc_ll geöffnet und im Kurzschlussintervall tc_ks für einen satten Kurzschluss die Schalter S21 und S21' oder die Schalter S11 und S11' durchgeschaltet. Im Leerlaufintervall tc_ll sind alle vier Schalter S11, S21', S11', S21 der Vollbrücke VB geöffnet. Bei Verwendung einer Halbbrücke HB (vgl. Fig. 2b) sind die Schalter S11 und S21 im Leerlaufintervall tc_ll geöffnet und im Kurzschlussintervall tc_ks jeweils abwechselnd, z.B. in einem 50/50-Verhältnis, geschlossen.

Als Grenzfälle wäre ein Kurzschlussintervall tc_ll von Null (d.h. ein Leerlaufintervall tc_ll in der Höhe der Periode T) oder ein Kurzschlussintervall tc_ll in der Höhe der Periode T (und damit ein Leerlaufintervall tc_ll von Null) vorstellbar. Das Kurzschlussintervall tc_ll sollte jedoch insbesondere bei einem PWM-Kurzschluss einer Halbbrücke HB vorteilhafterweise nicht bei Null liegen, sondern knapp darüber, vorzugsweise bei der minimalen Schutzzeit.

Die Wahl des richtigen Verhältnisses von Kurzschlussintervall tc_ks zu Leerlaufintervall tc_ll kann mittels des Kurzschlussreglers K durchgeführt werden, welcher der Regelungseinheit R vorgeschaltet sein kann (wie in angedeutet), oder integraler Bestandteil der Reglungseinheit R sein kann.

Vorteilhafterweise werden im geregelten Kurzschlussmodus K drei Phasen A, B, C vorgesehen. In einer Kurzschlussphase A, in welcher der Kurzschlussstrom ic kleiner als der Soll-Kurzschlussstrom ic_soll multipliziert mit einem Faktor a ist, $ic < ic\_soll \cdot a$, wird der zumindest eine Teil der Antriebspulen Sm, die mit einer Transporteinheit 1 zusammenwirken, über jede Periodendauer T, d.h. dauerhaft, im Kurzschluss betrieben, da der Ist-Kurzschlussstrom ic kleiner dem Soll-Kurzschlussstrom ic_soll ist. Dies kann bei Verwendung von Vollbrücken VB in der Steuerungseinheit 4 einen satten Kurzschluss, oder bei Verwendung von Halbbrücken HB in der Steuerungseinheit 4 einen "PWM-Kurzschluss" bedeuten. Das bedeutet, dass in der Kurzschlussphase A innerhalb jeder Periodendauer T das Kurzschlussintervall tc_ks maximiert wird und das Leerlaufintervall ic_ll minimiert wird. Dabei kann sich das Kurzschlussintervall tc_ks über die gesamte Periodendauer T erstrecken, womit das Leerlaufintervall tc_ll Null ist. Es kann grundlegend für die Kurzschlussphase A eine minimale Dauer für die Leerlaufphase tc_ll (d.h. eine maximale Dauer für die Kurzschlussphase tc_ks) vorgesehen sein, welche einer vordefinierten minimalen Schutzzeit entsprechen kann. Beispielsweise kann für den eine Periodendauer T von $25\mu s$ die minimale Dauer der Leerlaufphase tc_ll einer vordefinierten minimalen Schutzzeit, beispielsweise 500ns, entsprechen.

In einer Mischphase B, in welcher der Kurzschlussstrom ic dem Soll-Kurzschlussstrom ic_soll multipliziert mit einem Faktor a entspricht oder überschreitet, $ic \geq ic\_soll \cdot a$, und vorteilhafterweise kleiner dem Soll-Kurzschlussstrom ic_soll multipliziert mit (2-a) ist: $ic < ic\_soll \cdot (2 - a)$, wird der zumindest eine Teil der Antriebspulen Sm abwechselnd im Kurzschluss und im Leerlauf betrieben. Das bedeutet, dass sich in einer Periode T Kurzschlussintervall tc_ks und Leerlaufintervall tc_ll abwechseln. Insbesondere kann die jeweilige Dauer von Kurzschlussintervall tc_ks und Leerlaufintervall tc_ll innerhalb einer Periode T für die Mischphase B über ein Polynom dritter Ordnung mit einer Fehlerabweichung e_ic berechnet werden. Die Fehlerabweichung e_ic stellt die Abweichung des Kurzschlussstroms ic vom Soll-Kurzschlussstrom ic_soll dar.

In einer Leerlaufphase C, in welcher der Kurzschlussstrom ic dem Soll-Kurzschlussstrom ic_soll multipliziert mit dem Term (2 - a) entspricht oder überschreitet $ic \geq ic\_soll \cdot (2 - a)$ wird der zumindest eine Teil der Antriebspulen Sm im Leerlauf betrieben. Es wird durch die Steuerungseinheit 4 das Leerlaufintervall tc_ll maximiert und das Kurzschlussintervall tc_ks minimiert. Dabei kann sich das Leerlaufintervall tc_ll über die gesamte Periodendauer T erstrecken, womit das Kurzschlussintervall tc_ks Null ist. Es kann jedoch auch ein minimales Kurzschlussintervall tc_ks größer Null bzw. ein maximales Leerlaufintervall tc_ll kleiner der Periodendauer T vorgesehen sein. Wird beispielsweise ein Faktor a von Null gewählt, so findet ausschließlich die Mischphase B Anwendung.

Wird beispielsweise ein Faktor a von Eins gewählt, so erfolgt der Betrieb in der Kurzschlussphase A, wenn der Kurzschlussstrom ic kleiner als der Soll-Kurzschlussstrom ic_soll und die Leerlaufphase C, wenn der Kurzschlussstrom ic gleich oder größer als der Soll-Kurzschlussstrom ic_soll ist. In diesem Spezialfall gibt es dementsprechend keine Mischphase B.

Der Faktor a kann vorab bestimmt oder vorgegeben werden, wobei sich ein Faktor von a=0,85 für eine Kurzschlussstromregelung eines elektromagnetischen Transportsystems als besonders vorteilhaft erwiesen hat. Die Grenze von Leerlaufphase A zu Mischphase B ist für einen Faktor a=0,85 strichliert in Fig. 4 eingezeichnet, ebenso die Grenze von Mischphase B zu Kurzschlussphase C.

Vorteilhafterweise wird in der Mischphase B der zumindest eine Teil der Antriebspulen Sm jeweils abwechselnd über ein Kurzschlussintervall tc_ks im Kurzschluss betrieben und über ein Leerlaufintervall tc_ll im Leerlauf betrieben, wobei die Dauer des Kurzschlussintervalls tc_ks zur Dauer des Leerlaufintervalls tc_ll bestimmt wird.

In Fig. 8a ist ein Verlauf des Kurzschlussstroms ic über die Leerlaufphase tc_ll dargestellt, wobei von der Kurzschlussphase A über die Mischphase B in die Leerlaufphase C geschaltet wird. Hier ist das Leerlaufintervall tc_ll selbst in der Kurzschlussphase A nicht ganz Null, da eine minimale Dauer für die Leerlaufphase tc_ll vorgesehen ist. In Fig.8b ist ein Verlauf der Fehlerabweichung e_ über die Leerlaufphase tc_ll von der Leerlaufphase C über die zweite Phase B in die erste Kurzschlussphase A dargestellt. Da für die Berechnung des Leerlaufintervalls tc_ll und des Kurzschlussintervalls tc_ks in der Mischphase B für die Fehlerabweichung e_ic ein Polynom dritter Ordnung verwendet wird, können für den Kurzschlussstrom ic weiche Übergänge in die und aus der Mischphase B erreicht werden, womit ein Rauschen des Kurzschlussstromes ic gering gehalten werden kann. Es wäre alternativ auch möglich keine Mischphase B vorzusehen und hart von der Kurzschlussphase A in die Leerlaufphase C oder umgekehrt zu schalten.

In Fig. 9 ist der zeitliche Verlauf eines ersten Kurschlussstromes ic1 für einen permanenten, bzw. 50/50-PWM-Kurzschluss und einem zweiten Kurzschlussstrom ic2, welcher erfindungsgemäß erzeugt wird, dargestellt. Für den ersten Kurzschlussstrom ic1 eine maximale Kurzschlussphase tc_ks gewählt, d.h. eine dauerhafte Phase A. Im unteren Teil der Fig. 9 ist ein zeitlicher Verlauf einer ersten Bremskraft Fb1, welche aus dem ersten Kurzschlussstrom ic1 resultiert und ein zeitlichen Verlauf einer zweiten Bremskraft Fb2, welche aus dem zweiten Kurzschlussstrom ic2 resultiert. Es ist ersichtlich, dass die zweite Bremskraft Fb2 insbesondere direkt nach Start des Bremsvorgangs höher als die erste Bremskraft Fb1 ist, obwohl der zweite Kurzschlussstrom ic2 geringer als der erste Kurzschlussstrom ic1 ist, was aus einer erfindungsgemäß erhöhten vortriebskraftbildenden Kurzschlussstromkomponente icq resultiert. Zudem ist das Schwingungsverhalten des zweiten Kurzschlussstroms ic2 verbessert.

Die Auswahl der Antriebspulen Sm, welche gemäß des geregelten Kurzschlussmodus K angesteuert werden, kann grundlegend frei erfolgen. So können alle Antriebsspulen Sn oder ein Teil der Antriebsspulen Sn in den geregelten Kurzschlussmodus K geschaltet werden. Es können vorteilhafterweise die mit der Transporteinheit T1 magnetisch gekoppelten Antriebspulen Sm in den geregelten Kurzschlussmodus K geschaltet werden.

Welche Antriebsspulen Sm mit der Transporteinheit 1 gekoppelt sind, kann über die aktuelle Position der Transporteinheit 1 bestimmt werden. Diese Positionserkennung kann mittels geeigneter Positionssensoren erfolgen, welche bereits am elektromagnetischen Transportsystem vorgesehen sein können, beispielsweise wie in der AT 519 238 A1 beschrieben.

Es kann aber auch erkannt werden, welche Antriebsspulen Sm im kurzgeschlossenen Zustand einen Spulenkurzschlussstrom icm (der gemessen wird) führen. Daraus kann darauf geschlossen werden, welche der Antriebspulen Sm mit der Transporteinheit 1 magnetisch gekoppelt sind.

Wird erkannt, dass sich während des Bremsvorgangs die Transporteinheit 1 derart weiter bewegt, dass eine weitere, in Bewegungsrichtung w liegende, Antriebspule Sm mit der Transporteinheit 1 gekoppelt ist (z.B. da ein Spulenkurzschlussstrom icm induziert wird), so kann diese Antriebspule Sm ebenso in den Kurzschlussmodus K geschaltet werden. Das hat in der Regel zur Folge, dass eine Antriebspule Sm entgegen der Bewegungsrichtung w nicht mehr mit der Transporteinheit 1 gekoppelt ist, womit diese nicht mehr in Kurzschlussmodus K verbleiben muss. Dass die Antriebspule Sm entgegen der Bewegungsrichtung w nicht mehr mit der Transporteinheit 1 gekoppelt ist, kann jedoch ebenso über Positionssensoren oder Nicht-Induzierung eines Spulenkurzschlussstroms icm erkannt werden. Es kann erkannt werden, dass die letzte entgegen der Bewegungsrichtung w gekoppelte Antriebspule Sm nicht mehr mit der Transporteinheit 1 gekoppelt ist, womit darauf geschlossen werden kann, dass die nächste in Bewegungsrichtung w befindliche Spule Sm statt erstgenannter Antriebsspule Sm im Kurzschlussmodus K betrieben wird.

Vorteilhafterweise kann der Kurzschlussstrom ic, beispielsweise auf einen Schwellwert icmax, begrenzt werden. Dies kann erfolgen, indem vom Kurzschluss in den Leerlauf geschaltet wird. So ist es möglich den (mittleren) Kurzschlussstrom ic zu regeln - solange genug kinetische Energie in der Transporteinheit 1 vorhanden ist.

Allen hier beschriebenen Realisierungen der Sicherheitsfunktionen ist gemein, dass sie jeweils einer vorgegebenen Sicherheitsanforderungsstufe genügen müssen. Die Sicherheitsfunktion kann durch eine oder eine Kombination der beschriebenen Ausgestaltungen realisiert werden: Betrieb zumindest eines Teil der Antriebspulen Sm im Leerlauf, Betrieb zumindest eines Teil der Antriebspulen Sm im Kurzschluss, Betrieb zumindest eines Teil der Antriebspulen Sm im geregelten Kurzschluss, Vorsehen eines Bremselements E an der Transporteinheit 1 und/oder im Transportbereich 20, Vorsehen eines Blockierelements X an der Transporteinheit 1 und/oder im Transportbereich 20, Vorsehen eines Umlenkelements U an der Transporteinheit 1 und/oder im Transportbereich 20. Für diese Maßnahmen können jeweils dieselben oder verschiedene Sicherheitsbereiche S vorgesehen sein, sowie dieselben oder verschiedene Sicherheitsanforderungsstufen.

**Patentansprüche**

1. Verfahren zur Steuerung einer Transporteinheit (1) eines elektromagnetischen Transportsystems (2), vorzugsweise eines Langstatorlinearmotors oder eines Planarmotors, wobei das elektromagnetische Transportsystem (2) eine Steuereinheit (4) und in einem Transportbereich (20) angeordnete Antriebsspulen (Sm) umfasst, wobei die Steuereinheit (4) in einem Normalbetrieb die Antriebspulen (Sm) derart bestromt, dass sich ein mit einer Transporteinheit (1) gekoppeltes Magnetfeld im Transportbereich (20) in einer Bewegungsrichtung (w) bewegt um die Transporteinheit (1) entlang der Bewegungsrichtung (w) zu bewegen, **dadurch gekennzeichnet, dass** im Transportbereich (20) ein Sicherheitsbereich (S) vorgesehen ist, **und dass** eine Sicherheitsfunktion vorgesehen ist, welche entsprechend einer vorgegebenen Sicherheitsanforderungsstufe sicherstellt, dass die Transporteinheit (1) den Sicherheitsbereich (S) mit einer Geschwindigkeit (v) kleiner gleich einer Sicherheitsgeschwindigkeit (v_S) und/oder mit einer Transporteinheitskraft (F$_1$) kleiner gleich einer Sicherheitskraft (F_S) und/oder einer Transporteinheitsenergie (E$_1$) kleiner gleich einer Sicherheitsenergie (F_S) erreicht oder verhindert, dass die Transporteinheit (1) den Sicherheitsbereich (S) erreicht.

2. Verfahren nach Anspruch 1, **dadurch gekennzeichnet, dass** die Sicherheitsfunktion durch Auslösen eines Sicherheitszustands (N) aktiviert wird oder permanent aktiv ist.

3. Verfahren nach einem der Ansprüche 1 bis 2, **dadurch gekennzeichnet, dass** die Sicherheitsfunktion zumindest teilweise, vorzugsweise vollständig, redundant ausgeführt ist und/oder die Sicherheitsfunktion eine Diagnosefunktion umfasst, welche die Funktionsfähigkeit der Sicherheitsfunktion prüft.

4. Verfahren nach einem der Ansprüche 1 bis 3, **dadurch gekennzeichnet, dass** die Sicherheitsfunktion zumindest die Sicherheitsanforderungsstufe 1 nach der Normenreihe IEC 61508 und vorzugsweise weitere Sicherheitsanforderungen zumindest einer der Normenreihe IEC 61508 und/oder Normen ISO 13849, IEC 62061 erfüllt.

5. Verfahren nach einem der Ansprüche 1 bis 4, **dadurch gekennzeichnet, dass** der Sicherheitsbereich (S) ortsfest im Transportbereich (20) vorgesehen ist.

6. Verfahren nach einem der Ansprüche 1 bis 4, **dadurch gekennzeichnet, dass** die Position des Sicherheitsbereichs (S) im Transportbereich (20) dynamisch bestimmt wird.

7. Verfahren nach einem der Ansprüche 1 bis 4, **dadurch gekennzeichnet, dass** in Bewegungsrichtung (w) vor der Transporteinheit (1) ein sicherer Verzögerungsbereich (V) vorgesehen ist, **und dass** der Sicherheitsbereich (S) nach dem sicheren Verzögerungsbereich (V) beginnt.

8. Verfahren nach einem der Ansprüche 1 bis 7, **dadurch gekennzeichnet, dass** im Rahmen der Sicherheitsfunktion zumindest ein erster Teil der Antriebspulen (Sm) zumindest über einen Zeitabschnitt in einem Kurzschluss betrieben wird.

9. Verfahren nach einem der Ansprüche 1 bis 8, **dadurch gekennzeichnet, dass** im Rahmen der Sicherheitsfunktion zumindest ein zweiter Teil der Antriebsspulen (Sm) zumindest über einen Zeitabschnitt in einem Leerlauf betrieben wird.

10. Verfahren nach einem der Ansprüche 1 bis 9, **dadurch gekennzeichnet, dass** im Rahmen der Sicherheitsfunktion zumindest ein dritter Teil der Antriebsspulen (Sm) zumindest über einen ersten Zeitabschnitt in einem Kurzschluss betrieben wird, **und dass** der zumindest eine Teil der Antriebspulen (Sm) zumindest über einen zweiten Zeitabschnitt in einem Leerlauf betrieben wird.

11. Elektromagnetisches Transportsystem (2) umfassend eine Steuereinheit (4), eine Mehrzahl (m) in einem Transportbereich (20) angeordnete Antriebspulen (Sm) und zumindest eine Transporteinheit (1), wobei die Steuereinheit (4) ausgestaltet ist die Antriebspulen (Sm) derart zu bestromen, dass ein mit der Transporteinheit (1) gekoppeltes Magnetfeld im Transportbereich (20) in einer Bewegungsrichtung (w) bewegt wird, um die Transporteinheit (1) entlang der Bewegungsrichtung (w) zu bewegen, **dadurch gekennzeichnet, dass** im Transportbereich (20) ein Sicherheitsbereich (S) vorgesehen ist, **und dass** ein Sicherheitsmodul (M) vorgesehen ist, welches ausgestaltet ist entsprechend einer vorgegebenen Sicherheitsanforderungsstufe sicherzustellen, dass die Transporteinheit (1) den Sicherheitsbereich (S) mit einer Geschwindigkeit (v) kleiner gleich einer Sicherheitsgeschwindigkeit (v_S) und/oder mit einer Transporteinheitskraft ($F_1$) kleiner gleich einer Sicherheitskraft (F_S) und/oder einer Transporteinheitsenergie ($E_1$) kleiner gleich einer Sicherheitsenergie (E_S) erreicht oder zu verhindern, dass die Transporteinheit (1) den Sicherheitsbereich (S) erreicht.

12. Elektromagnetisches Transportsystem (2) nach Anspruch 11, **dadurch gekennzeichnet, dass** das Sicherheitsmodul (M) ein an der Transporteinheit (1) und/oder im Transportbereich (20) angeordnetes Bremselement (B) umfasst, welches ausgestaltet ist entsprechend einer vorgegebenen Sicherheitsanforderungsstufe sicherzustellten, dass die Bewegung der Transporteinheit (1) derart gebremst wird, dass sie den Sicherheitsbereich (S) mit einer Geschwindigkeit (v) kleiner gleich einer Sicherheitsgeschwindigkeit (v_S) und/oder mit einer Transporteinheitskraft ($F_1$) kleiner gleich einer Sicherheitskraft (F_S) und/oder einer Transporteinheitsenergie ($E_1$) kleiner gleich einer Sicherheitsenergie (E_S) erreicht oder zu verhindern, dass die Transporteinheit (1) den Sicherheitsbereich (S) erreicht.

13. Elektromagnetisches Transportsystem (2) nach Anspruch 11 oder 12, **dadurch gekennzeichnet, dass** das Sicherheitsmodul (M) ein an der Transporteinheit (1) und/oder im Transportbereich (20) angeordnetes Blockierelement (X) umfasst, welches ausgestaltet ist mit einer vorgegebenen Sicherheitsanforderungsstufe sicherzustellten, dass die Bewegung der Transporteinheit (1) derart blockiert wird, dass ein Erreichen des Sicherheitsbereich (S) verhindert wird.

14. Elektromagnetisches Transportsystem (2) nach Anspruch 11, **dadurch gekennzeichnet, dass dadurch gekennzeichnet, dass** das Sicherheitsmodul (M) ein an der Transporteinheit (1) und/oder im Transportbereich (20) angeordnetes Umlenkelement (U) umfasst, welches ausgestaltet mit einer vorgegebenen Sicherheitsanforderungsstufe sicherzustellen, dass die Bewegung der Transporteinheit (1) vor Erreichen des Sicherheitsbereich (S) aus dem Sicherheitsbereich (S) umgelenkt wird.

15. Elektromagnetisches Transportsystem (2) nach einem der Ansprüche 11 bis 14, **dadurch gekennzeichnet, dass** das elektromagnetische Transportsystem als Langstatorlinearmotor und/oder Planarmotor ausgeführt ist

Fig. 1a

Fig. 1b

Fig. 2a

Fig. 2b

Fig. 2c

Fig. 2d

20'

20

1

→ W,V

U

M

S

## Fig. 3a

20'

20

1

→ W,V

U

S

N → M

## Fig. 3b

Fig. 3c

Fig. 3d

Fig. 4a

Fig. 4b

Fig. 5

Fig. 6

Fig. 7

Fig. 8a

Fig. 8b

Fig. 9

**Europäisches Patentamt**
**European Patent Office**
**Office européen des brevets**

## EUROPÄISCHER RECHERCHENBERICHT

**Nummer der Anmeldung**

EP 20 21 1133

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 202 612 A1 (BERNECKER+RAINER INDUSTRIE-ELEKTRONIK GES MBH [AT]) 9. August 2017 (2017-08-09) | 1-7,11, 14,15 | INV. B60L3/00 B60L3/08 |
| Y | * Absätze [0001] - [0008], [0017] - [0021], [0034] - [0041]; Abbildungen 1-8 * | 8-13 | B60L7/00 B60L13/03 B60L15/00 B60L15/08 |
| X | DE 10 2015 102236 A1 (BECKHOFF AUTOMATION GMBH [DE]) 18. August 2016 (2016-08-18) * Absätze [0004], [0112], [0116], [0133], [0136]; Abbildungen 1-14 * | 1-4,11 | B60L15/20 H02P3/22 H02P3/26 |
| X,P | EP 3 653 428 A1 (B & R IND AUTOMATION GMBH [AT]) 20. Mai 2020 (2020-05-20) * Absätze [0033], [0037], [0041], [0045], [4658] - [0060]; Abbildungen 1-6 * | 1,11 | |
| Y | WO 2019/075193 A1 (VELOCITY MAGNETICS INC [US]) 18. April 2019 (2019-04-18) * Absätze [0083] - [0096]; Abbildungen 1-5 * | 8-13 | |
| A | WO 92/00862 A1 (UTDC INC [CA]) 23. Januar 1992 (1992-01-23) * Abbildungen 1-15 * | 1-15 | RECHERCHIERTE SACHGEBIETE (IPC) B60L H02P |
| A | DE 690 11 744 T2 (MAZDA MOTOR [JP]) 23. März 1995 (1995-03-23) * Absätze [0011] - [0013]; Abbildungen 1-25 * | 1-15 | |
| A | US 5 127 599 A (VERAART PIERRE [CA]) 7. Juli 1992 (1992-07-07) * Abbildungen 1-6 * | 1-15 | |
| A | WO 91/09750 A1 (UTDC INC [CA]) 11. Juli 1991 (1991-07-11) * Seiten 20-21; Abbildungen 1-11 * | 1-15 | |

Der vorliegende Recherchenbericht wurde für alle Patentansprüche erstellt

| Recherchenort | Abschlußdatum der Recherche | Prüfer |
|---|---|---|
| Den Haag | 21. April 2021 | Schury, Dominik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 21 1133

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-04-2021

| Im Recherchenbericht angeführtes Patentdokument | Datum der Veröffentlichung | Mitglied(er) der Patentfamilie | Datum der Veröffentlichung |
|---|---|---|---|
| EP 3202612 A1 | 09-08-2017 | AT 518354 A1<br>CA 2956747 A1<br>EP 3202612 A1<br>US 2017217460 A1 | 15-09-2017<br>02-08-2017<br>09-08-2017<br>03-08-2017 |
| DE 102015102236 A1 | 18-08-2016 | DE 102015102236 A1<br>US 2016241173 A1 | 18-08-2016<br>18-08-2016 |
| EP 3653428 A1 | 20-05-2020 | EP 3653428 A1<br>WO 2020104454 A1 | 20-05-2020<br>28-05-2020 |
| WO 2019075193 A1 | 18-04-2019 | CA 3078825 A1<br>WO 2019075193 A1 | 18-04-2019<br>18-04-2019 |
| WO 9200862 A1 | 23-01-1992 | AU 8051291 A<br>WO 9200862 A1 | 04-02-1992<br>23-01-1992 |
| DE 69011744 T2 | 23-03-1995 | DE 69011744 T2<br>EP 0400663 A1<br>KR 910000416 A<br>US 5121830 A | 23-03-1995<br>05-12-1990<br>29-01-1991<br>16-06-1992 |
| US 5127599 A | 07-07-1992 | KEINE | |
| WO 9109750 A1 | 11-07-1991 | AU 7034191 A<br>WO 9109750 A1 | 24-07-1991<br>11-07-1991 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9202719 B2
- US 2012193172 A1
- US 20060220623 A1
- AT 518721 A1
- AT 519238 A1